# EUROPÄISCHE PATENTSCHRIFT

(11) **EP 3 600 821 B1**
(45) Veröffentlichungstag und Bekanntmachung des Hinweises auf die Patenterteilung: **01.09.2021**
(21) Anmeldenummer: 18711295.8
(22) Anmeldetag: 13.03.2018
(51) Int. Cl.: B29C 45/06, B29C 45/04, B29C 45/56

(54) **VERFAHREN UND VORRICHTUNG ZUR HERSTELLUNG VON BAUTEILEN ODER PROFILEN**
METHOD AND DEVICE FOR PRODUCING COMPONENTS OR PROFILES
PROCÉDÉ ET DISPOSITIF DE FABRICATION DE DE PIÈCES OU DE PROFILÉS

(30) Priorität: 20.03.2017 AT 502152017
(43) Veröffentlichungstag der Anmeldung: 05.02.2020
(73) Patentinhaber: Steiner, Gottfried, 8724 Spielberg (AT)
(72) Erfinder: Steiner, Gottfried, 8724 Spielberg (AT)
(74) Vertreter: Vinazzer, Edith
(86) Internationale Anmeldenummer: PCT/EP2018/056137
(87) Internationale Veröffentlichungsnummer: WO 2018/172128

(56) Entgegenhaltungen:
- EP-B1- 2 205 420
- DE-A1-102008 056 052
- DE-C- 893 120
- US-A1- 2011 089 589

## Beschreibung

Die Erfindung betrifft ein Verfahren zur Herstellung von Bauteilen oder Profilen aus zumindest einer erstarrbaren plastischen Masse in einer Spritzgussanlage, welche stationäre Formkomponenten und gegenüber diesen bewegbare Formkomponenten aufweist, wobei die bewegbaren Formkomponenten zumindest eine Formkavität enthalten und die stationären Formkomponenten zumindest eine Angussstelle aufweisen, über welche die erstarrbare plastische Masse in den Bereich zwischen den stationären Formkomponenten und der/den Formkavität(en) in den bewegbaren Formkomponenten eingespritzt wird während die bewegbaren Formkomponenten mit der/den Formkavität(en) von der Angussstelle wegbewegt werden. Die Erfindung betrifft ferner eine Vorrichtung zur Herstellung von Bauteilen oder Profilen aus zumindest einer erstarrbaren plastischen Masse in einer Spritzgussanlage, welche stationäre Formkomponenten und gegenüber diesen bewegbare Formkomponenten aufweist, welche zumindest eine Formkavität enthalten, wobei die stationären Formkomponenten einen beheizbaren Vorlaufteil und einen kühlbaren Nachlaufteil sowie zumindest eine Angussstelle im Bereich des Vorlaufteils und/oder des Nachlaufteils aufweisen.

Ein derartiges Verfahren und eine derartige Vorrichtung sind beispielsweise aus der EP 2 205 420 B1 bekannt. Dieses unter der Bezeichnung EXJECTION® bekannte Verfahren dient zum Herstellen langgestreckter Profile oder Leisten aus einer erstarrenden plastischen Masse in einer Form mit einem unteren und einem oberen Formteil unter Einspritzen der plastischen Masse in eine Kavität in einem profilierten Formeinsatz, welcher sich auf einem linear beweglichen Schlitten befindet. Dabei wird die eingespritzte plastische Masse unter Fortschreiten und kontinuierlicher Verlängerung des gebildeten Profils bzw. der gebildeten Leiste und unter fortschreitender Erstarrung der Kunststoffmasse durch Wegbewegung des Schlittens von der Angussstelle aus der Form heraus transportiert. Die plastische Masse wird dabei solange eingespritzt, bis das Profil bzw. die Leiste seine bzw. ihre vorgesehene Länge erreicht hat. Der profilierte Formeinsatz bildet gemeinsam mit den den Angusseinsatz aufweisenden oberen Formteilen bzw. Formeinsätzen lediglich zu Beginn und am Ende des Spritzvorganges geschlossene Kavitätsabschnitte. Während der Bewegung des profilierten Formeinsatzes bleibt nach dem Füllen des ersten Endabschnittes der Formkavität die plastische Masse mit einem freien Frontabschnitt gegenüber dem oberen Formteil positioniert, wobei die Formkavität im Formeinsatz weiter aufgefüllt wird. Bei diesem bekannten Verfahren handelt es sich somit um eine Kombination aus einem Spritzgussprozess und einem Extrusionsprozess zur Herstellung langgestreckter Kunststoff-Fertigteile, insbesondere aus thermoplastischen Kunststoffmassen. Da der Bauteil unmittelbar von oberen stationären Formeinsätzen während der Linearbewegung des Schlittens mitgebildet wird erfordert die Herstellung einer qualitativ zufriedenstellenden Oberfläche in diesem Bereich eine besonders sorgfältige und heikle Abstimmung der Parameter des Spritzverfahrens. Diese Oberflächenbereiche unterscheiden sich jedoch optisch von der in der Kavität ausgebildeten Oberfläche des Bauteils.

Aus der DE 10 2015 003 206 A1 sind ein Verfahren und eine Vorrichtung zur Herstellung von Tapes aus Thermoplasten und Endlosfasern mittels der EXJECTION® Technologie bekannt. Es ist eine Düse vorgesehen, welcher zwei Spritzaggregate zugeordnet sind, wobei schüttfähiges Polymermaterial von zwei Spitzaggregaten alternierend zur Düse und von der Düse zu den durch eine Imprägnierungseinrichtung transportierten Fasern gefördert wird. Dabei wird aus dem schüttfähigen Polymermaterial eine Matrix gebildet, in die die Fasern eingebettet werden.

Aus der WO 2016/097012 A1 sind ein Verfahren und eine Vorrichtung zur Herstellung einer elektrischen Leitung mit einem Leitungskern und mit einem diesen umgebenden Außenmantel bekannt. In einem kontinuierlichen Formgebungsverfahren werden mittels einer Werkzeugform einzelne Mantelabschnitte des Außenmantels sukzessive durch ein Umgeben des Leitungskerns mit einer erstarrbaren plastischen Masse ausgebildet. Der Außenmantel wird in zumindest einem Teilabschnitt mit einer in Leitungslängsrichtung veränderlichen Querschnitts-Geometrie gebildet.

Die EP 2 746 026 A2 befasst sich mit einem Verfahren und einer Vorrichtung zum Herstellen von Kunststoffvorformlingen aus einem thermoplastischen Kunststoff, wobei der geschmolzene thermoplastische Kunststoff kontinuierlich mit Druck in einen Heißkanal eines Heißkanalwerkzeuges eingebracht wird. Eine mehrere Kavitäten aufweisende Transporteinrichtung mit einer Fläche, welche Öffnungen der Kavitäten aufweist, wird über eine Fläche des Heißkanalwerkzeuges geführt, wobei immer wenigstens eine Öffnung einer Kavität über dem Heißkanal positioniert ist.

Die EP 2 712 721 A1 befasst sich mit einem Verfahren zur Herstellung von Hohlkörpern, insbesondere von Kathetern, wobei dieses Verfahren ebenfalls auf der EXJECTION® Technologie basiert.

Der Erfindung liegt die Aufgabe zugrunde, das Verfahren und die Vorrichtung der eingangs genannten Art weiter zu entwickeln und weiter zu verbessern, insbesondere um auch dickwandige Bauteile und Bauteile mit komplexer Geometrie - sowohl langgestreckte Profile als auch Einzelteile in größerer Anzahl - qualitativ hochwertig ausgeprägt und mit einer gleichmäßigen Oberflächenqualität auf rationelle, kostengünstige Weise herstellen zu können. Das Verfahren und die Vorrichtung sollen ferner einen großen Freiheitsgrad bezüglich der Ausführung der Bauteilgeometrien ermöglichen.

Gelöst wird die gestellte Aufgabe erfindungsgemäß durch ein Verfahren mit folgenden Schritten:
a) Einspritzen von erstarrbarer plastischer Masse in einen in den bewegbaren Formkomponenten gebildeten Verteilerkanal und von diesem über Anbindungen
b₁) entweder abschnittsweise in eine einzige Formkavität
b₂) oder nacheinander in einzelne Formkavitäten,
c) wobei der Verteilerkanal im Bereich der Angussstelle sowie in einer entgegen der Bewegungsrichtung der bewegten Formkomponenten an der einen Seite der Angussstelle befindlichen Vorlaufzone und in einer in der Bewegungsrichtung der bewegten Formkomponenten an der anderen Seite der Angussstelle befindlichen Nachlaufzone von zumindest einer stationären, temperierbaren Formkomponente mitumschlossen wird,
d) wobei im Verteilerkanal ein kontinuierlicher Verteilerkanal-Massestrang mit Anbindungs-Massesträngen gebildet wird, welcher unter zunehmender Abkühlung sowie Erstarrung und zunehmender Länge gemeinsam mit den befüllten Formkavitäten bzw. Formkavitätsabschnitten von der Angussstelle weg transportiert wird,
e) wobei der Verteilerkanal-Massestrang mitsamt den Anbindungs-Massesträngen nach seinem Erstarren und nach Öffnen der Formkavität bzw. der Formkavitäten von dem bzw. den Bauteil(en) abgetrennt wird und
f) der Bauteil bzw. die Bauteile ausgeworfen wird bzw. werden.

Die erfindungsgemäße Vorrichtung ist dadurch gekennzeichnet, dass die bewegbaren Formkomponenten entweder eine langestreckte Formkavität oder in einer Reihe angeordnete einzelne Kavitäten enthalten und einen als Vertiefung ausgeführten Verteilerkanal aufweisen, welcher über Anbindungen entweder mit der langestreckten Formkavität oder mit den einzelnen Kavitäten verbunden ist,
wobei der Verteilerkanal bei geschlossener Form im Bereich des Vorlaufteils und des Nachlaufteils vom Vorlaufteil und vom Nachlaufteil mitumschlossen ist.

Die Erfindung eröffnet durch das Einspritzen der plastifizierten Masse in einen Verteilerkanal die Möglichkeit, über die Anbindungen sowohl Einzelkavitäten als auch Kavitätsabschnitte von langestreckt ausgeführten Kavitäten zu befüllen. Dadurch lassen sich auch Bauteile mit komplexer Geometrie qualitativ hochwertig ausbilden. Die bis auf die lokalen Ansatzstellen der Anbindungen umschlossenen Kavitäten ermöglichen das Herstellen von Bauteilen mit einer einheitlichen, tadellosen Oberfläche. Das erfindungsgemäße Verfahren weist daher die Vorteile der aus dem Stand der Technik bekannten EXJECTION® Technologie auf ohne mit deren Nachteilen behaftet zu sein.

Bei einer bevorzugten Ausführungsform der Erfindung ist das Verfahren ein diskontinuierliches Verfahren, bei welchem die bewegbaren Formkomponenten linear bewegt werden. Ein diskontinuierliches Verfahren ermöglicht die Herstellung von Bauteilen endlicher Länge oder von Einzelbauteilen einer durch die Anzahl der einzelnen Formkavitäten begrenzten Anzahl.

Besonders vorteilhaft ist eine Ausführungsvariante des erfindungsgemäßen Verfahrens als kontinuierliches Verfahren, bei welchem bewegbare Formkomponenten fortlaufend unmittelbar aneinandergefügt werden, befüllt werden, der/die Bauteile entformt wird bzw. werden und die Formkomponenten zum neuerlichen Befüllen zur Angussstelle rückgeführt werden. Besonders bevorzugt ist ein kontinuierliches Verfahren, bei welchem die bewegbaren Formkomponenten entlang eines geschlossenen Kreises bewegt werden. Diese Varianten ermöglichen die Herstellung eines "endlosen" Profils oder die Herstellung einer großen Anzahl von einzelnen Bauteilen, wobei diese Anzahl nicht durch die Anzahl der Formkavitäten begrenzt ist. Ein kontinuierliches Herstellverfahren wird dann beendet, wenn das Profil die gewünschte Länge erreicht hat oder wenn die erwünschte Stückanzahl an einzelnen Bauteilen erreicht ist.

Um die eingespritzte erstarrbare plastische Masse in jenem Bereich, in welchem vorrangig ein Befüllen der Formkavität(en) über die Anbindungen im Verteilerkanal erfolgt, im plastischen Zustand zu halten ist es vorteilhaft, wenn die die Vorlaufzone mitumschließende bzw. die Vorlaufzone bildende Formkomponente bei Thermoplasten als Formmasse beheizt, bei Duroplasten oder Elastomeren als Formmasse gekühlt wird.

In der Nachlaufzone, unmittelbar an der anderen Seite der Angussstelle, ist es von Vorteil, wenn die plastische Masse im Verteilerkanal, den Anbindungen und der/den Formkavität(en), bei Thermoplasten als Formmasse gekühlt wird, um den Erstarrungsvorgang zu unterstützen, bei Duroplasten oder Elastomeren als Formmasse vorerst beheizt wird, um ein chemisches Vernetzen der Masse zu erzielen. Die den Verteilerkanal in der Nachlaufzone umschließende Formkomponente wird daher entweder gekühlt oder beheizt.

Bei der bevorzugten Ausführung des diskontinuierlichen Verfahrens befüllt die erstarrbare plastische Masse über die Anbindungen abschnittsweise eine langgestreckte Formkavität oder einzelne, in einer Reihe verlaufende Formkavitäten, die in zumindest einem Formeinsatz ausgebildet sind, welcher auf einem linear bewegbaren Schlitten angeordnet ist.

Beim diskontinuierlichen Verfahren werden nach dem Befüllen der Formkavität bzw. sämtlicher Formkavitäten die bewegbaren Formkomponenten angehalten, die Zufuhr von plastischer Masse gestoppt und es folgen die Schritte e) und f) aus Anspruch 1.

Beim kontinuierlichen Verfahren gemäß der Erfindung ist besonders vorteilhaft, wenn die erstarrbare plastische Masse über die Anbindungen abschnittsweise eine kreisförmig umlaufende Formkavität oder entlang eines Kreises aufeinanderfolgende einzelne Formkavitäten befüllt, wobei die Formkavität bzw. die einzelnen Formkavitäten innerhalb von Formeinsätzen vorgesehen ist bzw. sind, welche am kreisförmigen Außenumfang einer Dreheinheit der Kreisform folgend unmittelbar aneinander anschließen.

Das kontinuierliche Verfahren gemäß der Erfindung ermöglicht eine besonders hohe Produktivitätssteigerung. In diesem Zusammenhang ist es besonders vorteilhaft, dass in Schritt e) der erstarrte Verteilerkanal- Massestrang und die erstarrten Anbindungs-Massestränge nach dem Austreten der Formeinsätze aus der Nachlaufzone durch sukzessives Öffnen der Formeinsätze fortlaufend abgetrennt werden. Besonders vorteilhaft ist ferner, dass auf Schritt e) folgend die Formeinsätze nacheinander komplett geöffnet werden, entweder der in der jeweiligen Kavität gebildete Bauteil ausgeworfen wird, oder der in der kreisförmig umlaufenden Formkavität kontinuierlich gebildete Bauteil abschnittsweise entformt wird, wobei anschließend die Formeinsätze der Reihe nach geschlossen werden und während der kontinuierlichen Drehbewegung der Dreheinheit nacheinander wieder in die Vorlaufzone eintreten.

Bei einer bevorzugten Ausführung einer erfindungsgemäßen Vorrichtung, welche die Herstellung von Bauteilen nach einem diskontinuierlichen Verfahren gestattet, weist die Vorrichtung als bewegbare Formkomponente einen linear bewegbaren Schlitten auf, welcher mit zumindest einem Formeinsatz versehen ist, der die langgestreckte Formkavität oder die einzelnen Formkavitäten enthält, über deren Erstreckung der Verteilerkanal als im Formeinsatz gerade verlaufende Vertiefung ausgebildet ist.

Die langgestreckte Formkavität im Formeinsatz kann zur Herstellung von geraden Profilen gerade verlaufen, sie kann jedoch auch insgesamt bogenförmig gekrümmt sein und derart die Herstellung von leicht bogenförmig gekrümmten Bauteilen gestatten.

Bei einer bevorzugten Ausführung einer erfindungsgemäßen Vorrichtung, die eine kontinuierliche Herstellung von Bauteilen gestattet, weist die Vorrichtung als bewegbare Formkomponente eine Dreheinheit mit einem kreisförmigen Außenumfang auf, auf welcher der Kreisform folgend unmittelbar aneinander anschließende Formeinsätze angeordnet sind, die entweder jeweils eine Formkavität oder gemeinsam eine einzige kreisförmig umlaufende Formkavität enthalten, wobei der Verteilerkanal als kreisförmig umlaufende Vertiefung über sämtliche Formeinsätze verläuft.

Sowohl bei der Ausführungsvariante mit einem Schlitten als auch bei jener mit einer Dreheinheit weisen der Vorlaufteil und der Nachlaufteil dem Formeinsatz bzw. den Formeinsätzen zugewandte freie Randabschnitte mit Randflächen auf, welche bei geschlossener Form den Verteilerkanal dicht abdecken. Somit ist in jenen Bereichen der Form, in welchen die erstarrbare plastische Masse eingespritzt wird, sichergestellt, dass die Kavität bzw. Kavitäten mit erstarrbarer plastischer Masse über den Verteilerkanal und die Anbindungen befüllt wird bzw. werden und dass der Nachlaufteil die erstarrbare plastische Masse im Verteilerkanal sowie auch in den Anbindungen und in der/den Kavität(en), je nachdem ob die Masse ein Thermoplast oder ein Elastomer bzw. Duroplast ist, entweder kühlt oder beheizt.

Bei einer weiteren vorteilhaften Ausführung der Erfindung ist der Vorlaufteil gegenüber dem Nachlaufteil abgesetzt bzw. tiefer gesetzt, sodass der Verteilerkanalspalt im Bereich unterhalb des Vorlaufteiles dünnwandiger ist als im Bereich unterhalb des Nachlaufteiles. Der Druck der eingespritzten Masse kann dadurch in den bereits gefüllten Abschnitten der Formkavität länger aufrechterhalten werden.

Bei einer weiteren bevorzugten Ausführungsform der Erfindung weist die Vorrichtung eine Prägeeinrichtung mit Prägestempeln auf, die lokal in den Verteilerkanal im Bereich der Anbindungen einfahrbar sind. Die Prägestempel sorgen daher über Druck auf die Masse in den Anbindungen gezielt für eine Erhöhung des Druckes in der Kavität nach dem Befüllen. Auf diese Weise können vor allem dickwandigere Bereiche der Kavität optimal mit erstarrbarer plastischer Masse befüllt werden.

Bei einer weiteren Ausführungsvariante der Erfindung weist die Prägeeinrichtung Prägestempel auf, die in die Kavität bzw. die Kavitäten einfahrbar sind. Diese Maßnahme erlaubt es, die erstarrbare plastische Masse insbesondere in jenen Bereichen, in welchen voluminösere Elemente des Bauteils ausgebildet werden, beim Abkühlen lokal stärker zu verdichten, sodass die Volumenschwindung entsprechend verringert wird.

Besonders vorteilhaft ist die Betätigung der Prägeeinrichtung mittels einer Prägeleiste, die an einer stationären Formkomponente angeordnet ist, wobei die Prägestempel in einer bewegbaren Formkomponente derart positioniert sind, dass sie bei der Bewegung dieser Formkomponente nacheinander in ihre Prägeposition bringbar sind.

Bei einer weiteren vorteilhaften Ausgestaltung der erfindungsgemäßen Vorrichtung ist eine Fließbremseinrichtung mit einer an einer stationären Formkomponente angeordneten, stationären Betätigungsleiste und mit in einer bewegbaren Formkomponente gelagerten Schiebern vorgesehen, welche nacheinander aus dem Verteilerkanal im Bereich der des Vorlaufteils gefahren werden, sobald ein Abschnitt des Verteilerkanals die Düse in Richtung Nachlaufteil passiert hat. Dadurch wird die Masse in der Kavität besser mit Druck versorgt, nachdem der jeweilige Abschnitt des Verteilerkanals unter der Düse durchgefahren ist.

Insbesondere bei einer erfindungsgemäßen Vorrichtung mit einer Dreheinheit, also beim Durchführen des kontinuierlichen Verfahrens, ist es von Vorteil, wenn zur Sicherstellung einer ständigen Versorgung des Verteilerkanals und der Kavitäten mit erstarrbarer Masse zwei Spritzaggregate eingesetzt werden. Eine entsprechend ausgeführte Vorrichtung weist daher zwei Spritzaggregate und einen Kanalblock mit zwei von den Spritzaggregaten mit erstarrbarer plastischer Masse versorgbare Düsen auf, wobei von jeder Düse ein Kanal ins Zentrum des jeweiligen Kanalblockes verläuft. Hier kann nun bei einer Ausführungsform der Erfindung über ein Umschaltventil abwechselnd einer der beiden Kanäle mit einem weiteren Kanal, welcher zur Angussstelle im Bereich des Vorlauf- und Nachlaufteiles verläuft, verbunden sein. Bei einer alternativen Ausführung sind im Zentrum des Kanalblockes über Nadelverschlussdüsen die beiden Kanäle gleichzeitig oder abwechselnd mit einem weiteren Kanal, welcher zur Angussstelle im Bereich des Vorlauf- und Nachlaufteiles verläuft, verbindbar. Vor allem diese Ausführungsvariante gestattet es, über eine entsprechende Betätigung der Nadelverschlussdüsen beim Wechsel der Spritzaggregate einen konstanten Druck der erstarrbaren plastischen Masse sicherzustellen.

Eine weitere, vorteilhafte Ausführungsvariante der Erfindung erlaubt das Herstellen von Bauteilen aus zwei unterschiedlichen erstarrbare plastischen Massen in einem Zwei-Komponenten-Verfahren. Bei dieser Vorrichtung sind zwei Düsen vorgesehen, die beide im Vorlaufteil positioniert sind oder Bestandteil einer Einheit der Spritzgussmaschine sind, wobei jede Düse mit einer entsprechend zusammengesetzten separaten erstarrbaren plastischen Masse versorgbar ist.

Weitere Merkmale, Vorteile und Einzelheiten der Erfindung werden nun anhand der Zeichnung, die schematisch mehrere Ausführungsbeispiele darstellt, näher beschrieben.

### Dabei zeigen

Fig. 1a bis 1c Ansichten eine Ausführungsvariante einer erfindungsgemäßen Vorrichtung in unterschiedlichen Verfahrensstadien,
Fig. 1d eine Querschnittsdarstellung im Bereich einer Düse,
Fig. 2 eine zweite Ausführungsform der erfindungsgemäßen Vorrichtung in einer zu Fig. 1c analogen Darstellung,
Fig. 3 eine dritte Ausführungsform in der erfindungsgemäßen Vorrichtung in einer zu Fig. 1c analogen Darstellung,
Fig. 4a bis 4c eine vierte Ausführungsform in zu Fig. 1a bis 1c analogen Darstellungen,
Fig. 5, 5a und 5b Ansichten einer Ausführungsvariante einer Prägevorrichtung,
Fig. 6, 6a und 6b Ansichten einer weiteren Ausführungsform einer Prägevorrichtung,
Fig. 7 eine Ansicht einer weiteren Ausführungsvariante einer erfindungsgemäßen Vorrichtung in einer Querschnittsdarstellung,
Fig. 7a eine Schnittdarstellung entlang der Linie VIIa-VIIa der Fig. 7,
Fig. 8, Fig. 9, Fig. 10 und Fig. 11 Ansichten von Ausführungen mit zwei Spritzaggregaten in Schnittdarstellungen,
Fig. 12 eine Ansicht einer weiteren Ausführungsvariante einer erfindungsgemäßen Vorrichtung mit zwei Düsen in einer zu Fig. 1c anlogen Darstellung,
Fig. 13 eine Ansicht einer weiteren Ausführungsvariante einer erfindungsgemäßen Vorrichtung in einer zu Fig. 1b anlogen Darstellung und
Fig. 13a bis 13c Ansichten einer Ausführungsvariante einer Fließbremseinrichtung.

In sämtlichen Figuren sind von einer Spritzgussmaschine nur jene Komponenten dargestellt, die an der Formgebung der herzustellenden Bauteile mittelbar oder unmittelbar beteiligt sind. Positionsbezeichnungen in der nachfolgenden Beschreibung wie oben, unten, links, rechts und dergleichen beziehen sich auf die Darstellungen in den Figuren.

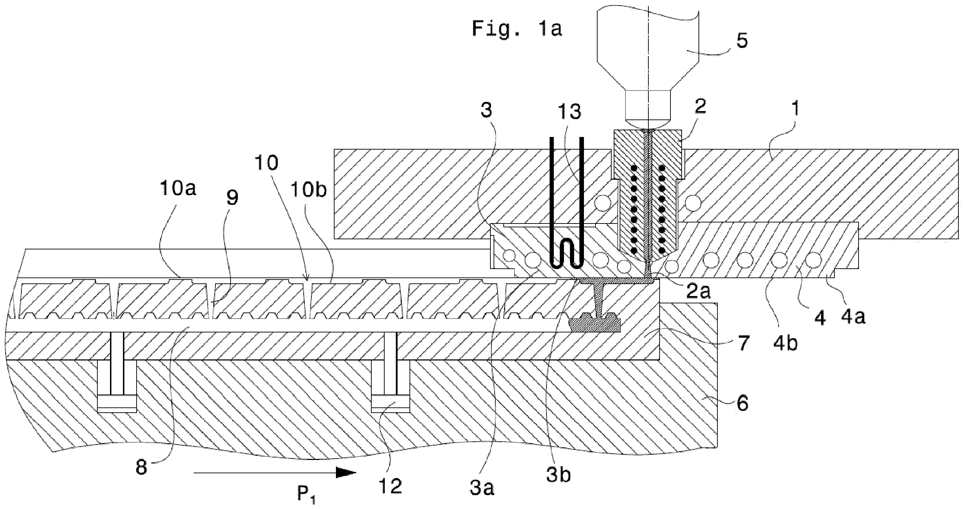

Die in den Figuren 1a bis 1c, 2, 3, 4a bis 4c, Fig. 12 und Fig. 13 dargestellten Ausführungsvarianten der Erfindung sind Varianten zur Herstellung eines oder mehrerer Bauteile in einem diskontinuierlichen Verfahren. Bei diesen Varianten der Erfindung sind zwei Formteile vorgesehen, welche zum Öffnen und Schließen voneinander weg und aufeinander zu bewegbar sind. Zu dem einen oberen Formteil gehört ein an diesem auf nicht gezeigte Weise befestigter Formeinsatz 1, durch welchen sich eine von einem in den Figuren nur angedeuteten Spritzaggregat 5 wegführende Düse 2 mit einem Düsenloch 2a erstreckt, durch welches im Betrieb der Spritzgussmaschine plastifizierte Masse unter Druck austritt. Im Formeinsatz 1 sind ein eine Vorlaufzone bildender Vorlaufteil 3 und ein eine Nachlaufzone bildender Nachlaufteil 4 eingesetzt, wobei bei den in den Figuren gezeigten Ausführungsvarianten die Düse 2 zwischen dem Vorlaufteil 3 und dem Nachlaufteil positioniert ist. Sowohl der Vorlaufteil 3 als auch der Nachlaufteil 4 sind insbesondere mehrteilig ausgeführt und in an sich bekannter Weise mit Kanälen zum Durchleiten eines Temperiermediums versehen. Im Vorlaufteil 3 befinden sich ferner Heizelemente 13 zum Erhalten der eingespritzten Masse im Schmelzezustand, wenn es sich um eine thermoplastische Masse handelt. Bei einer alternativen Ausführungsvariante der Erfindung erstreckt sich die Düse durch den Vorlaufteil, der Nachlaufteil schließt nach der Düse unmittelbar an.

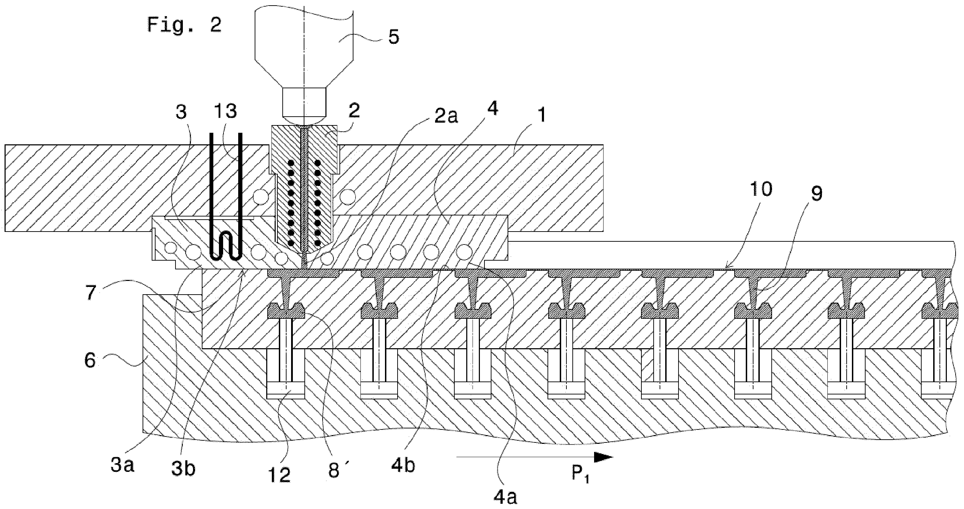

Am zweiten unteren Formteil ist ein langgestreckter Schlitten 6 in Richtung des Pfeiles P1 in den Figuren und in Richtung seiner Längserstreckung linear verschiebbar angeordnet. In der Längserstreckung des Schlittens 6 ist in diesem ein Formeinsatz 7 positioniert, welcher bei den in Fig. 1a bis 1c, 3, 4a bis 4c und 12 dargestellten Ausführungsvarianten eine einzige, langgestreckte Formkavität 8, bei der in Fig. 2 gezeigten Ausführungsform eine Vielzahl von nacheinander, in Reihe angeordneten Formkavitäten 8' enthält. Die Formkavität 8 ist beispielsweise derart ausgebildet, dass in ihr ein langgestreckter Bauteil, beispielsweise eine Leiste oder ein Profil, hergestellt wird. Die Formkavitäten 8' sind beispielsweise dafür vorgesehen, eine Vielzahl gleicher Einzelteile herzustellen. Die Formkavität 8 ist in insbesondere regelmäßigen Abständen über Anbindungen 9 mit einem Verteilerkanal 10 auf der Oberseite des Formeinsatzes 7 in Verbindung, jede Formkavität 8' ist insbesondere mit je einer Anbindung 9 - einem Verbindungskanal - mit einem Verteilerkanal 10 verbunden. Der Verteilerkanal 10 ist eine im Wesentlichen über die Längsersterstreckung der Formkavität 8 bzw. über die Erstreckung der Reihe von Formkavitäten 8' verlaufende Vertiefung im Formeinsatz 7. Der Verteilerkanal 10 weist bei den dargestellten Ausführungen zwischen den Anbindungen 9 verengte bzw. seichte Abschnitte 10a, an den Mündungsbereichen der Anbindungen 9 vertiefte Abschnitte 10b auf. In sämtlichen Abschnitten 10a, 10b weist der Verteilerkanal 10 vorzugsweise eine über seine Längserstreckung konstante Breite auf, die an die Fließfähigkeit der erstarrbaren plastischen Masse und die jeweilige Geometrie der Formkavität 8 bzw. der Formkavitäten 8' angepasst wird und in der Größenordnung von einigen Millimetern beträgt. Das Düsenloch 2a der Düse 2 weist bei der gezeigten Ausführung einen Durchmesser auf, der geringer ist als die Breite des Verteilerkanals 10.

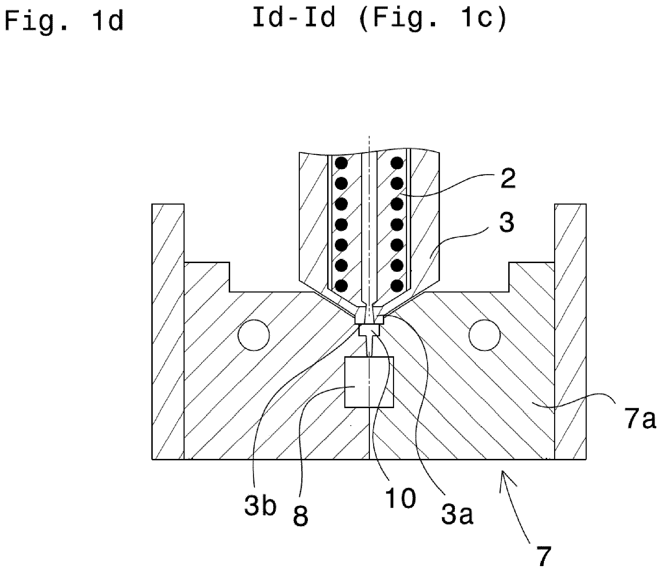

Wie die Schnittdarstellung in Fig. 1d zeigt, weist der Formeinsatz 7 mehrere, beispielsweise zwei Backen 7a auf, die die Formkavität 8, bei mehreren Kavitäten 8'diese, die Anbindungen 9 und den Verteilerkanal 10 umschließen, gegeneinander verspannbar sind und zum Öffnen der Kavität 8 bzw. Kavitäten 8' voneinander wegbewegbar sind. Oberhalb des Verteilerkanals 10 bilden die Backen 7a eine bei der gezeigten Ausführung im Querschnitt V-förmige Vertiefung, in welcher in der geschlossenen Lage der Form im Querschnitt gegengleich, daher vorzugsweise V-förmig, gestaltete untere, in Schlittenlängsrichtung linear verlaufende Randabschnitte 3a, 4a des Vorlaufteils 3 und des Nachlaufteils 4 eingreifen. Schmale Randflächen 3b, 4b an den Randabschnitten 3a, 4a des Vorlaufteils 3 und des Nachlaufteils 4 verschließen den Verteilerkanal 10 von oben in jenen Bereichen, wo sich der Vorlaufteil 3 und der Nachlaufteil 4 jeweils während des Einspritzungsvorganges der erstarrbaren plastischen Masse und der Linearbewegung des Schlittens 6 befinden.

Mittels einer Anzahl von Auswerfern 12 wird der hergestellte Bauteil bzw. werden die hergestellten Bauteile bei geöffneten Backen 7a der Form entnommen. Bei einer Ausführung mit einer Anzahl von Formkavitäten 8' ist pro Formkavität 8' zumindest ein Auswerfer 12 vorgesehen.

Zur Linearbewegung des Schlittens 6 in Richtung des Pfeiles P1 ist zumindest ein nicht gezeigter Antrieb, insbesondere ein Linearantrieb, vorgesehen, welcher in bekannter Weise, beispielsweise elektrisch, mechanisch, pneumatisch oder hydraulisch, betätigt wird.

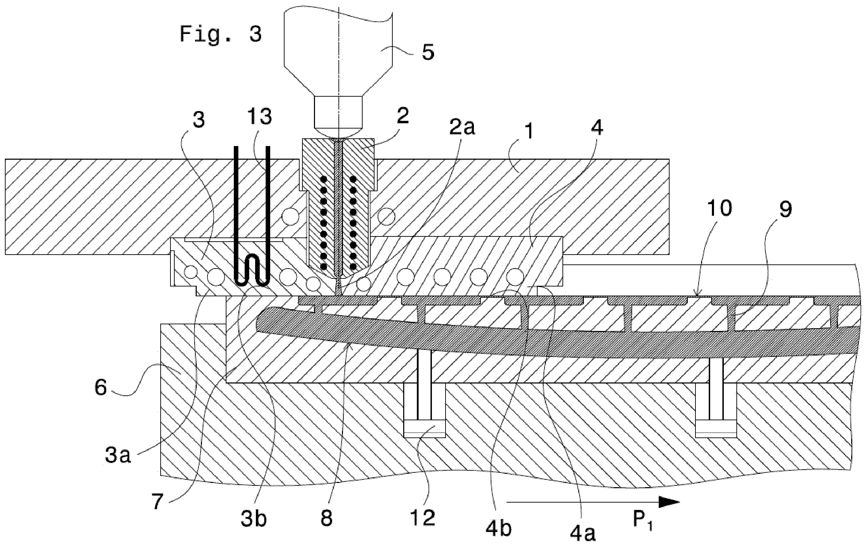

Fig. 3 zeigt eine Ausführungsform, bei der ein Bauteil hergestellt wird, welcher insgesamt leicht bogenförmig gekrümmt ist. Im Formeinsatz 7 wird durch eine entsprechende Ausgestaltung der Backen eine insgesamt gebogene Kavität 8 mit Anbindungen 9 entsprechend variierender Längen zur Verfügung gestellt. Ansonsten entspricht diese Ausführung jener gemäß den Figuren 1a bis 1c.

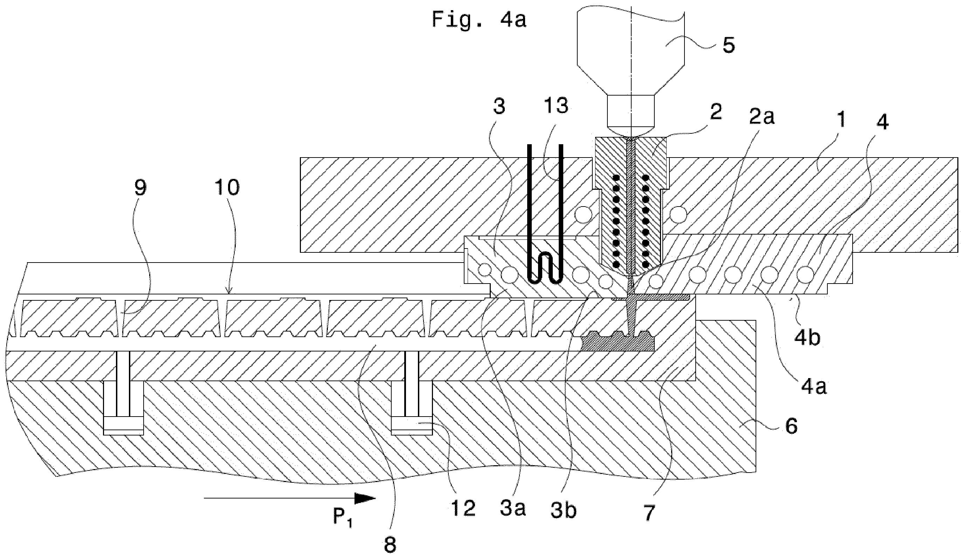

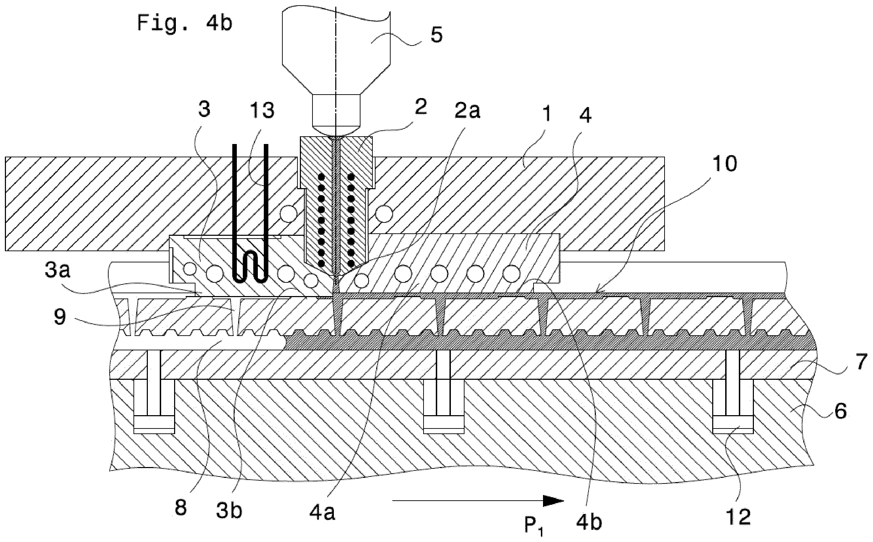

Die in Fig. 4a bis 4c gezeigte Ausführungsform entspricht weitgehend ebenfalls jener gemäß Fig. 1a bis 1c, weist jedoch als Besonderheit einen gegenüber dem Nachlaufteil 4 abgesetzten bzw. tiefer gesetzten Vorlaufteil 3 auf, sodass der Verteilerkanalspalt im Bereich unterhalb des Vorlaufteils 3 dünnwandiger ist als im Bereich unterhalb des Nachlaufteiles 4. Der Druck der eingespritzten Masse kann dadurch in bereits gefüllten Abschnitten der Formkavität 8 länger aufrechterhalten werden als bei den anderen Ausführungsvarianten.

Die grundsätzliche Funktionsweise der erfindungsgemäßen Vorrichtungen gemäß den Figuren 1a bis 1c, 2, 3, 4a bis 4c und Fig. 12 und der grundsätzliche Ablauf des diskontinuierlichen Verfahrens wird nun anhand der Figuren 1a bis 1c sowie der Figuren 4a bis 4c beschrieben.

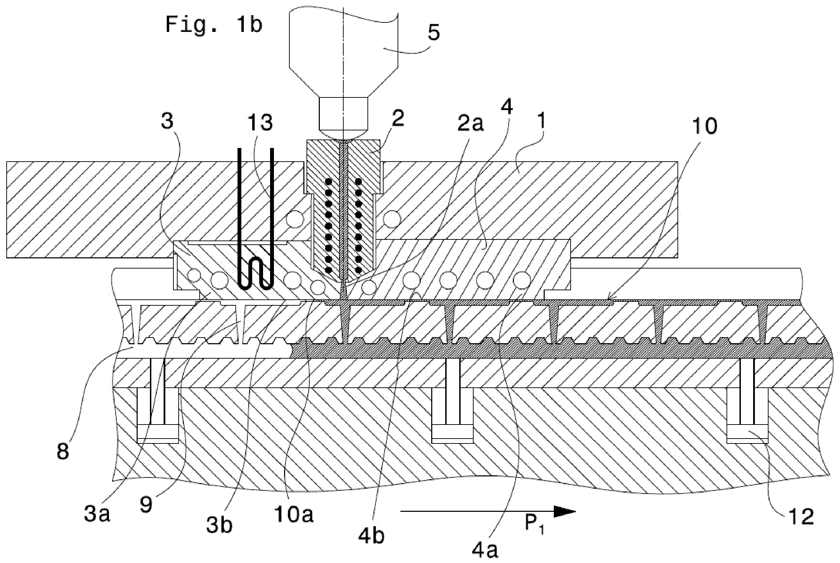

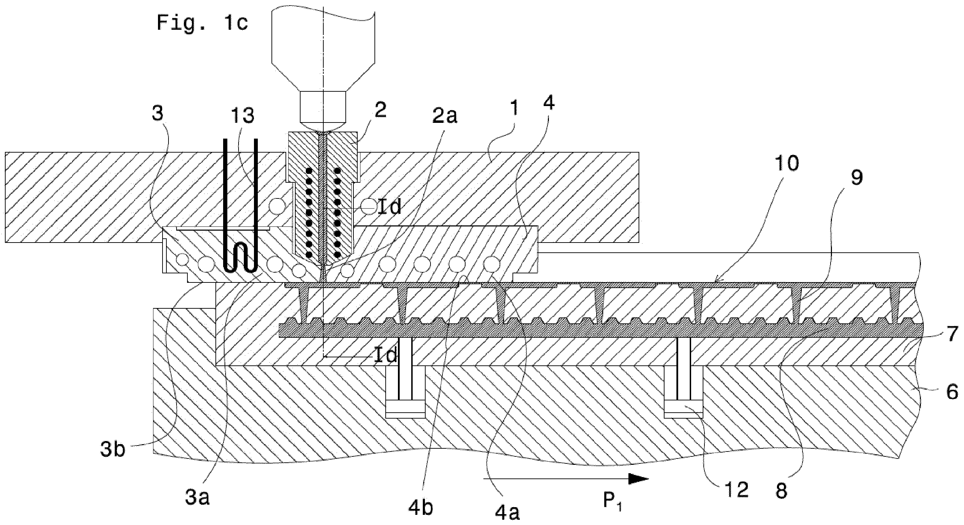

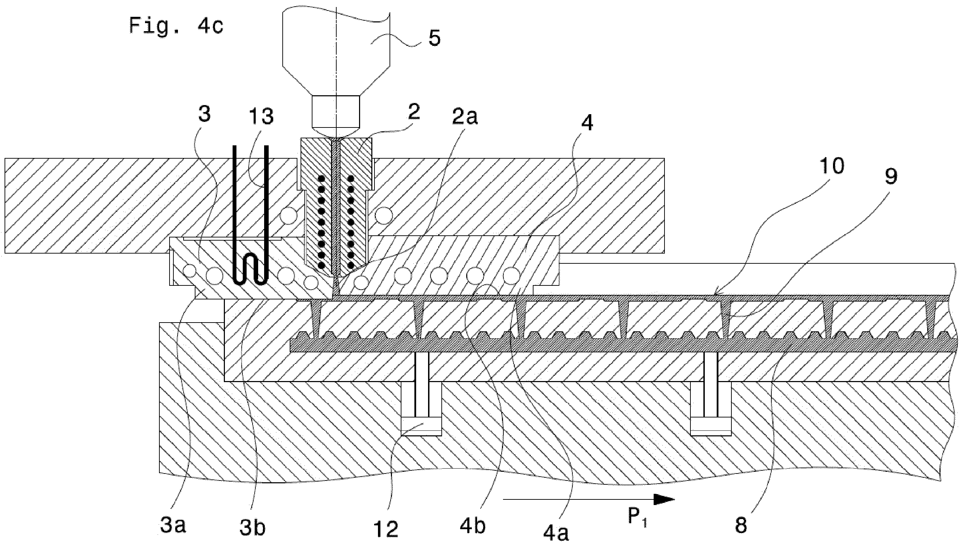

Die Form wird geschlossen, die Schließkraft aufgebracht, der Schlitten 6 in seine Startposition verfahren. Zu Beginn des Spritzvorganges, Fig. 1a und Fig. 4a, befindet sich der Schlitten 6 daher mitsamt dem Formeinsatz 7 in seiner Startposition, in welcher sich die Düse 2 beim vorderen Ende, hier das rechte Ende, der Formkavität 8 und daher auch beim vorderen Ende des Verteilerkanals 10 befindet. Nun wird erstarrbare plastische Masse über die Düse 2 unter hohem Druck eingespritzt und der Schlitten 6 in Bewegung versetzt, wobei über den Verteilerkanal 10 und die erste Anbindung 9 vorerst der vordere Endabschnitt der Formkavität 8 aufgefüllt wird. Die erstarrbare plastische Masse, die innerhalb des Verteilerkanals 10 unterhalb des Vorlaufteils 3 etwas vordringt bildet unterhalb des Vorlaufteils 3 eine freie Massefront, Fig. 1b und Fig, 4b, die im Wesentlichen auch während der Bewegung des Schlittens 6 in Richtung des Pfeiles P1 erhalten bleibt. Während der Bewegung des Schlittens 6 wird die Formkavität 8 nacheinander über die Anbindungen 9 mit der erstarrbaren plastischen Masse befüllt. Der Verteilerkanal 10 sorgt daher für ein sukzessives Füllen der Formkavität 8 mit erstarrbarer plastischer Masse und für eine entsprechende Nachdruckphase. Die dünnwandigen Abschnitte 10a wirken als "Fließbremsen", bewirken eine Druckerhöhung, sodass die erstarrbare plastische Masse unter entsprechendem Druck in die Anbindungen 9 gelangt. Bei thermoplastischen Massen kühlt der mit Kühlmittel versorgte Nachlaufteil 4 sowohl die im Verteilerkanal 10 als auch die in den Anbindungen 9 befindlichen Massestränge, bei Massen aus Elastomeren oder Duroplasten wird der Nachlaufteil beheizt, um eine chemische Vernetzung des Kunststoffs zu erzielen. Beim Fortbewegen des Schlittens 6 tritt der Verteilerkanal 10 aus dem Nachlaufteil 4, die im Verteilerkanal 10 und in den Anbindungen 9 befindlichen Massestränge erstarren. Sobald die Formkavität 8 komplett (Fig. 1c, Fig. 4c) bzw. die einzelnen Kavitäten 8' (Fig. 2) mit Masse gefüllt sind, wird der Schlitten 6 gestoppt. Es wird noch ein gewisser Nachdruck aufgebracht und anschließend die Zufuhr von plastischer Masse ebenfalls gestoppt. Nach einer Abkühlphase wird die Form geöffnet, der Formeinsatz 7 wird durch Auseinanderfahren der Backen 7a geöffnet. Der Verteilerkanal-Massestrang mitsamt den Anbindungssträngen wird nun vor oder nach dem Auswerfen des gebildeten Bauteils bzw. der gebildeten Bauteile durch Abtrennen entfernt.

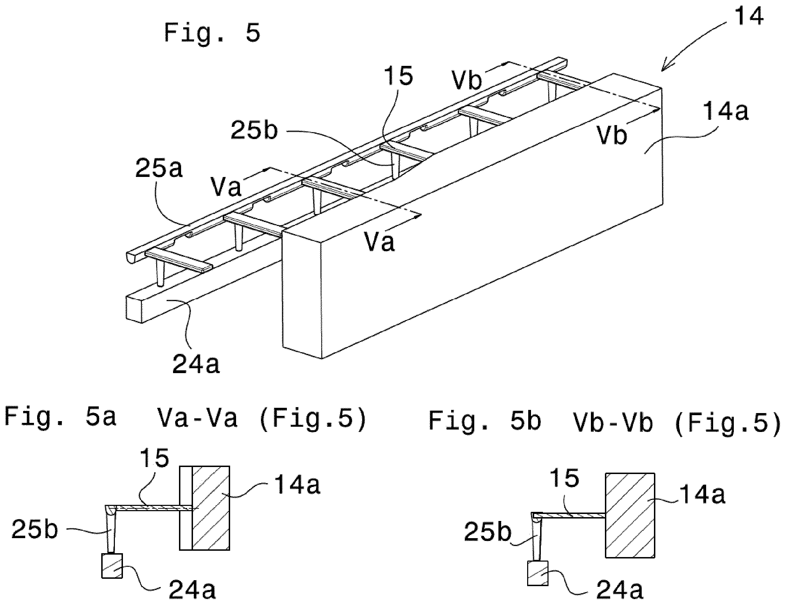

Fig. 5 veranschaulicht gemeinsam mit den Schnittdarstellungen in Fig. 5a und Fig. 5b die Funktionsweise einer Prägeeinrichtung 14, die lokal auf die erstarrbare plastische Masse im Verteilerkanal 10 im Bereich der Anbindungen 9 wirkt. Fig. 5a ist ein Schnitt entlang der Linie Va - Va der Fig. 5, Fig. 5b ein Schnitt entlang der Linie Vb - Vb der Fig. 5. Dargestellt sind der Übersichtlichkeit halber der aus der plastische Masse zu bildende Bauteil 24a, der Verteilerkanal- Massestrang 25a und einige Anbindungs-Massestränge 25b. Die Prägeeinrichtung 14 weist eine Prägeleiste 14a auf, die stationär, beispielsweise am Formeinsatz 1, positioniert ist. Die Prägeeinrichtung 14 weist ferner eine der Anzahl von Prägestempeln 15, entsprechend der Anzahl der Anbindungen 9, auf. Die Prägestempel 15 sind auf nicht gezeigte Weise im Schlitten 6 derart positioniert, dass sie bei der Bewegung des Schlittens 6 von der Prägeleiste 14a nacheinander in ihre Prägeposition - sobald eine Kavität - bei Einzelkavitäten - oder ein Kavitätsabschnitt mit plastischer Masse befüllt ist - verschoben werden. Der gegenseitige Abstand der Prägestempel 15 ist auf den gegenseitigen Abstand der Anbindungen 9 abgestimmt. Die Schnittdarstellung in Fig. 5a zeigt die Position eines Prägestempels 15 in seiner unbetätigten Lage bei einem Anbindungs-Massestrang 25b. Fig. 5b zeigt die Position eines Prägestempels 15 in seiner Prägelage, der Prägestempel 15 ist in die plastische Masse im Verteilerkanal 10 eingefahren und sorgt für eine Erhöhung des Druckes in der Kavität 8 nach dem Befüllen, insbesondere um ein optimales Befüllen von dickwandigeren Bereichen der Kavität 8 sicherzustellen.

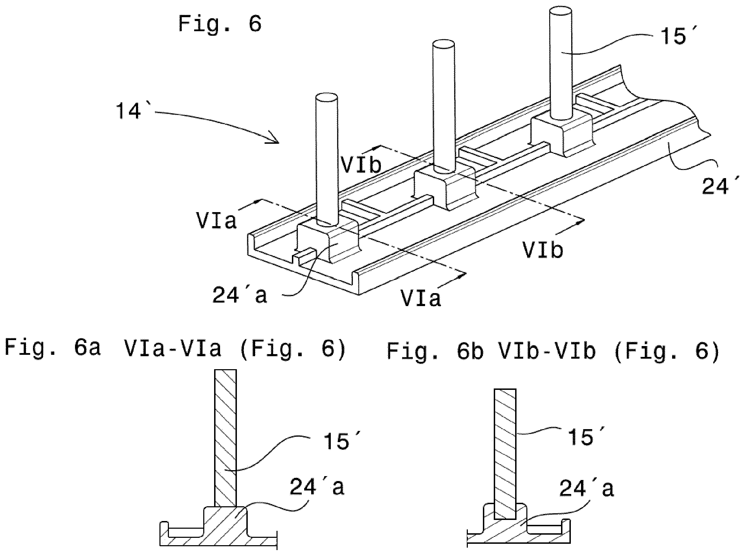

Bestandteile einer weiteren Ausführungsvariante einer Prägeeinrichtung 14' und deren Funktionsweise sind in den Figuren 6, 6a und 6b dargestellt. Fig. 6a ist ein Schnitt entlang der Linie VIa - VIa der Fig. 6, Fig. 6b ein Schnitt entlang der Linie VIb - VIb der Fig. 6. Die Anordnung der hier nicht gezeigten Prägeleiste erfolgt analog zur bereits beschriebenen Ausführungsform, nämlich stationär. Die Prägestempel 15' befinden sich bei dieser Ausführungsform insbesondere vorpositioniert innerhalb des Formeinsatzes 7 bzw. eines der den Formeinsatz 7 bildenden Backens 7a, beispielweise horizontal orientiert. Bei der gezeigten Ausführung wird beispielsweise ein Bauteil 24' hergestellt, welcher in regelmäßigen voluminösere klotzartige Elemente 24'a aufweist zusammensetzt. Jeder Prägestempel 15' ist jenem Bereich der Formkavität 8 zugeordnet, welcher jeweils einen der voluminöseren, klotzartigen Elemente 24'a des Bauteils 24' bildet. Fig. 6a zeigt die Position eines Prägestempels 15' vor dem Prägen, Fig. 6b während des Prägens. Der Prägestempel 15' drückt sich in die Masse im voluminöseren, klotzartigen Element 24'a. Die voluminöseren Elemente des Bauteils weisen eine größere Volumenschwindung auf als die dünnwandigen, stabförmigen Abschnitte, da sie langsamer abkühlen, eine Druckversorgung der voluminöseren Bauteilelemente über die dünnwandigen, stabförmigen Abschnitte wäre zeitlich nur sehr begrenzt möglich. Die Prägestempel 15' sorgen dafür, dass die Masse in den voluminöseren Elementen beim Abkühlen lokal stärker verdichtet wird, sodass die Volumenschwindung entsprechend verringert wird.

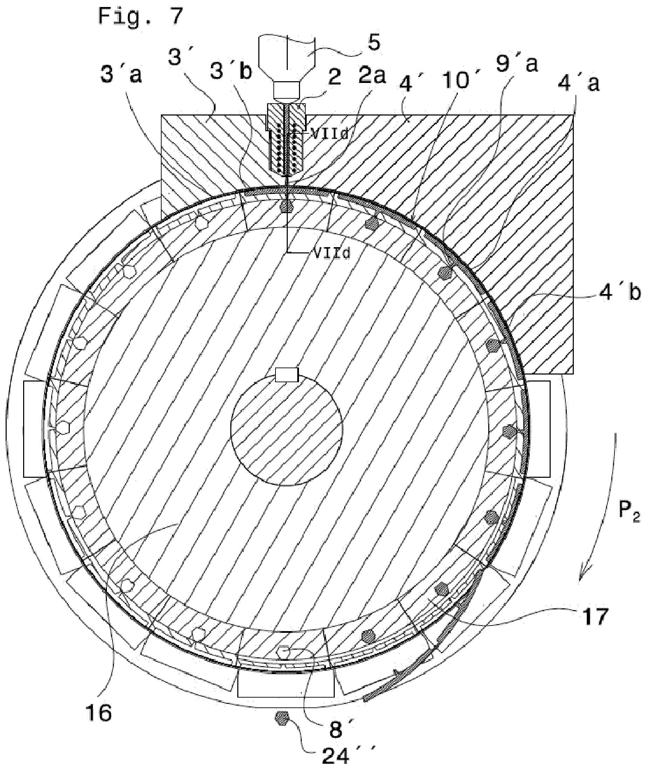

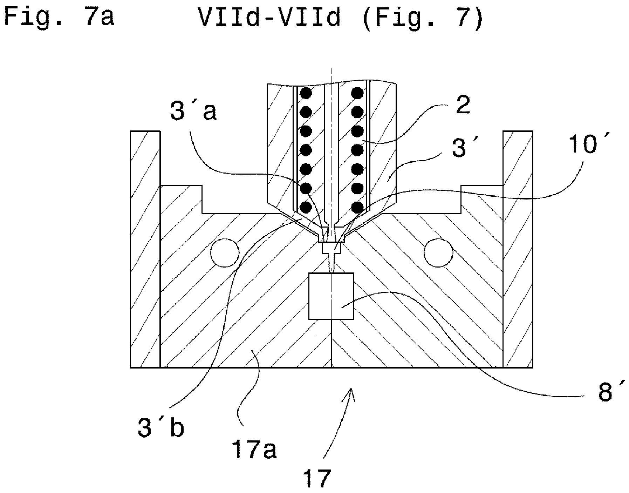

Die in den Figuren 7 und 7a dargestellte Ausführungsvariante der Erfindung ist eine Variante zur Herstellung eines oder mehrerer Bauteile in einem kontinuierlichen Verfahren. Fig. 7 und Fig. 7a veranschaulichen eine Ausführungsform der erfindungsgemäßen Vorrichtung mit einer Form mit einer Dreheinheit, wobei Fig. 7a eine Schnittdarstellung entlang der Linie VIIa-VIIa der Fig. 7 zeigt. Die Dreheinheit weist einen mittels einer nicht gezeigten Antriebseinheit in eine kontinuierliche Drehbewegung versetzbaren, mit einem kreisförmigen Außenumfang versehenen Träger 16 auf, an dessen Außenumfang eine Vielzahl von Formeinsätzen 17 unmittelbar aneinander anschließend angeordnet ist, sodass sämtliche Formeinsätze 17 einen Formeinsatzkreis bilden. Über sämtliche Formeinsätze 17 verläuft, wenn sämtliche Formeinsätze 17 geschlossen sind, den Träger 16 kreisförmig umlaufend ein Verteilerkanal 10. An einem gegenüber der Dreheinheit stationären Teil der Vorrichtung, beispielsweise einem nicht gezeigten Kanalblock der Form, sind beim oberen Bereich des Trägers 16 bzw. der Dreheinheit ebenfalls stationär ein Vorlaufteil 3' und ein Nachlaufteil 4' positioniert. Analog zu den bereits beschriebenen Ausführungsformen befindet sich eine von einem Spritzaggregat 5 wegführende Düse 2 mit dem Düsenloch 2a vorzugsweise zwischen dem Vorlaufteil 3' und dem Nachlaufteil 4'. Der Vorlaufteil 3' und der Nachlaufteil 4' weisen konzentrisch zum Verteilerkanal 10' ausgebildete kreisbogenförmig verlaufende untere Randabschnitte 3'a, 4'a, auf, deren Randflächen 3'b, 4'b, analog zu den bereits beschriebenen Ausführungen, bei geschlossener Form gemeinsam mit dem Verteilerkanal 10' eine umschlossene Vorlauf- und Nachlaufzone bilden. Wie Fig. 7a zeigt, weisen auch die Formeinsätze 17 Backen 17a auf, die bei dieser Ausführung entsprechend des Kreisumfanges der Dreheinheit gestaltet sind, um, wenn sämtliche Formeinsätze 17 geschlossen sind, gemeinsam den kreisförmig umlaufenden, als Vertiefung ausgebildeten Verteilerkanal 10' zu bilden. Die Backen 17a jedes Formeinsatzes 17 beinhalten in der gegeneinander verspannten Lage jeweils zumindest eine separate Formkavität 8' sowie jeweils zumindest eine als Kanal ausgebildete Anbindung 9', welche in die zwischen den Backen 17a gebildete, einen Abschnitt des Verteilerkanals 10' bildende Vertiefung mündet.

Fig. 7a zeigt die Dreheinheit im Bereich der Düse 2, wobei der beispielhaft V-förmige Randabschnitt 3'a des Vorlaufteils 3 und der zwischen den beiden Backen 17a ausgebildete Verteilerkanal 10' zu sehen sind.

Zum Betrieb der Vorrichtung wird die Dreheinheit über den Anrieb in eine kontinuierliche und konstante Drehbewegung versetzt. Analog zu den bereits geschriebenen Ausführungsformen bildet sich beim Einspritzen von erstarrbarer plastischer Masse in der Vorlaufzone unterhalb des Vorlaufteils 3' im Verteilerkanal 10' eine freie Massefront während die einzelnen Kavitäten 8' über den Verteilerkanal 10' und die Anbindungen 9' nacheinander befüllt werden. Die gefüllten Kavitäten 8' werden in Drehrichtung (Pfeil P₂) von der Düse 2 wegbewegt, wobei jeder Formeinsatz 17 mit fortschreitender Entfernung von der Angussstelle die Nachlaufzone unterhalb des gekühlten (bei Thermoplasten) oder beheizten (bei Elastomeren oder Duroplasten) Nachlaufteiles 4'durchläuft. Die plastische Masse im Verteilerkanal 10', in den Anbindungen 9' und in der jeweiligen Kavität 8' beginnt abzukühlen. Schließlich tritt jeder Formeinsatz 17 aus dem Nachlaufteil 4' heraus und die plastische Masse kühlt weiter ab und erstarrt. Insbesondere nach etwa einem Viertel bis zur Hälfte des Umfanges der Dreheinheit wird jeder Formeinsatz 17 automatisch geöffnet, sodass der Massestrang im Verteilerkanal 10 mitsamt den Anbindungssträngen abgetrennt werden kann. Auch dieser Vorgang erfolgt kontinuierlich von Formeinsatz 17 zu Formeinsatz 17. Die Formeinsätze 17 werden anschließend nacheinander automatisch komplett geöffnet, der in der Kavität 8' gebildete Bauteil wird automatisch ausgeworfen. Fig. 7 zeigt beispielhaft einen unmittelbar ausgeworfenen Bauteil 24". Anschließend werden die Formeinsätze 17 der Reihe nach wieder automatisch geschlossen und gelangen während der kontinuierlich Drehbewegung der Dreheinheit nacheinander wieder in die Vorlaufzone unterhalb des Vorlaufteiles 3' und werden wieder einer nach dem anderen mit plastischer Masse befüllt.

Bei einer alternativen, gesondert nicht dargestellten Variante mit einer Dreheinheit wird von sämtlichen Formeinsätzen eine zusammenhängende kreisförmig umlaufende Formkavität gebildet, sodass ein "endloses" Profil, insbesondere ein verformbares, aufwickelbares Profil, auch mit variierender Querschnittsgestaltung, herstellbar ist.

Bei einer weiteren alternativen, gesondert nicht dargestellten Variante zur Herstellung eines oder mehrerer Bauteile in einem kontinuierlichen Verfahren werden in einer Transporteinrichtung einzelne Formeinsätze fortlaufend, beispielsweise linear, unmittelbar aneinandergefügt, befüllt, wie beschrieben, der/die Bauteile entformt, die Formeinsätze wieder geschlossen und zur Angussstelle rückgeführt.

Werden die Formeinsätze nach dem Auswerfen der Bauteile gegen anders gestaltete Formkavitäten aufweisende Formeinsätze getauscht und die Bauteile nacheinander wieder in diese Formeinsätze eingesetzt kann beispielsweise ein Anspritzen einer zweiten Massekomponente über eine zweite Düse erfolgen. Alternativ kann eine zweite Dreheinheit mit entsprechenden Formeinsätzen vorgesehen werden.

Analog zur Ausführung gemäß Fig. 4a bis 4c kann auch bei der Ausführung mit einer Dreheinheit ein abgesetzter Vorlaufteil 3' vorgesehen sein.

Die Dreheinheit wird insbesondere von einem Elektromotor mit oder ohne Getriebe in Drehbewegung versetzt, welcher über die Steuerung der Spritzgussmaschine oder separat angesteuert wird.

Während die erstarrbare plastische Masse kontinuierlich eingespritzt wird, werden gefüllte Kavitäten und der Verteilerkanal-Massestrang durch die Drehbewegung der Dreheinheit von der Düse wegbewegt. Diese Phasen laufen zwar räumlich nacheinander aber zeitlich simultan ab. Dadurch ergibt sich eine deutliche Produktivitätssteigerung gegenüber einem klassischen Spritzgussprozess.

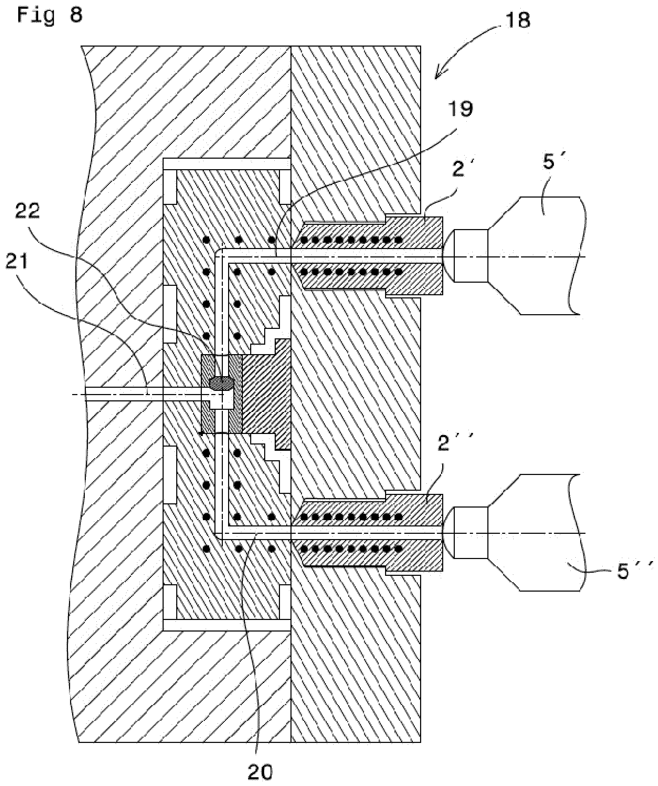

Fig. 8 bis 11 zeigen Ausführungsvarianten einer kontinuierlichen Versorgung einer Dreheinheit mit erstarrbarer plastischer Masse. Sämtliche dieser Figuren zeigen von horizontal angeordneten Spritzaggregaten 5',5" wegführende Düsen 2', 2". Die Düsen 2', 2" sind in einem Kanalblock 18 positioniert, welcher gemäß der Anordnung und Führung von Kanälen 19, 20, 21 entsprechend mehrteilig ausgeführt ist. Von jeder Düse 2', 2" führt ein Kanal 19, 20 ins Zentrum des jeweiligen Kanalblockes 18. Hier erfolgt eine Verbindung bzw. ein Übergang dieser beiden Kanäle 19,20 in den Kanal 21, welcher in die Düse 2 im Bereich des Vorlauf- und Nachlaufteiles 3', 4' einmündet.

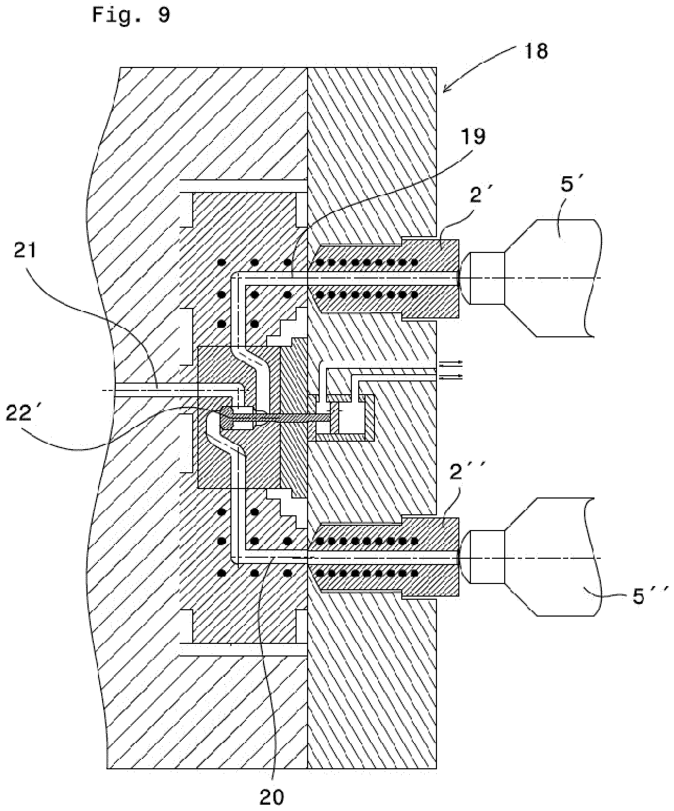

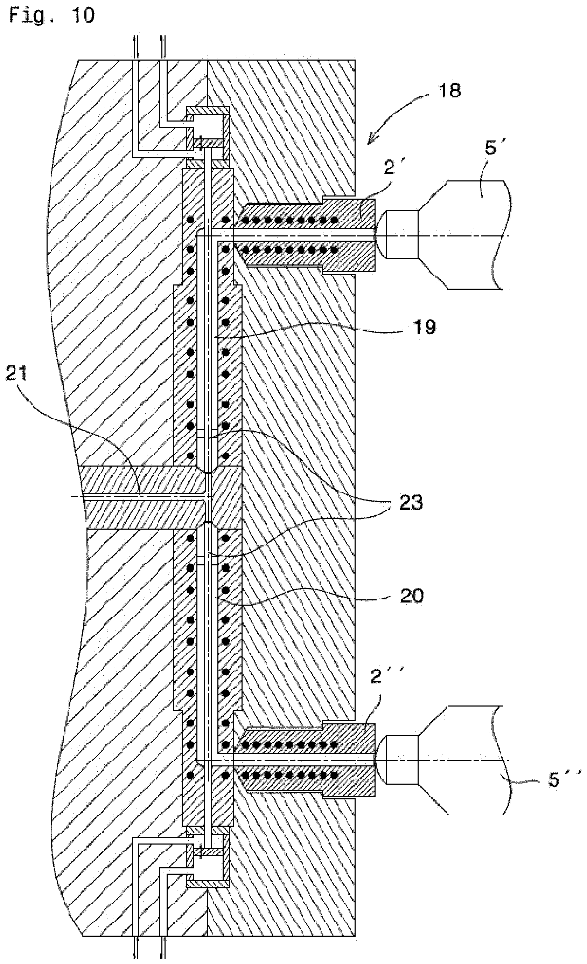

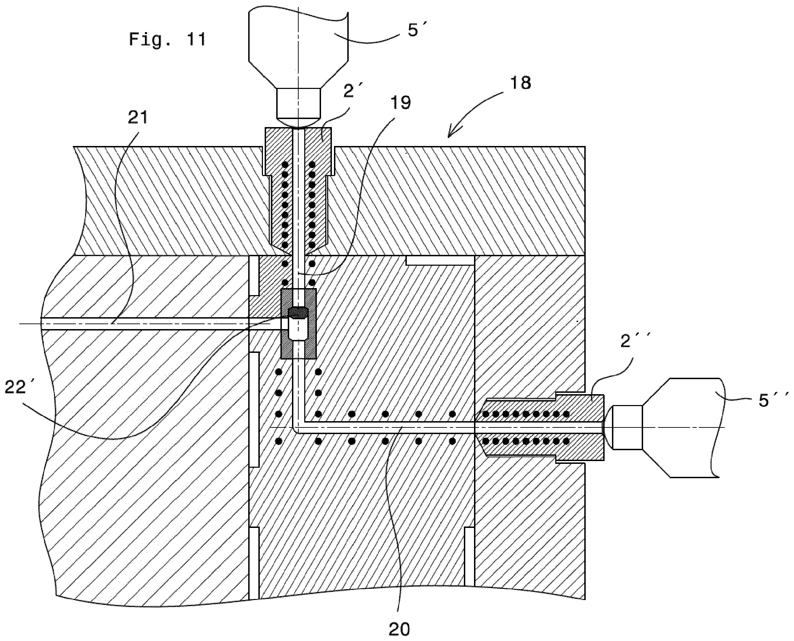

Bei der in Fig. 8 gezeigten Ausführungsform bilden Abschnitte der Kanäle 19, 20 gemeinsam mit dem Kanal 21 eine T-Kreuzung, an welcher ein in dieser Figur angedeutetes Umschaltventil 22 dafür sorgt, dass abwechselnd der Kanal 21 vom Spritzaggregat 5' und vom Spritzaggregat 5" mit Schmelze versorgt wird. Das Umschlagventil 22 wird beispielsweise über Druckdifferenzen in den Spritzaggregaten 5', 5" entsprechend gesteuert. Bei der in Fig. 9 gezeigten Ausführungsvariante ist ein Umschaltventil 22' vorgesehen, welches mit einer Kolbenstange und einem Kolben gekoppelt ist, sodass die Betätigung des Umschaltventils 22' hydraulisch oder pneumatisch erfolgen kann. Alternativ kann auch die Betätigung mittels eines Elektroantriebes vorgesehen sein. Bei dieser Ausführungsform erfolgt vorzugsweise die Umschaltung bzw. Freigabe der Kanäle 19,20 über eine Steuerung, die den Schneckenweg in den Aggregaten 5', 5" berücksichtigt. Bei der in Fig. 10 gezeigten Ausführungsvariante wird der Massestrom zum Kanal 21 über Nadelverschlussdüsen 23 geregelt. Bei dieser Ausführungsform kann dem Kanal 21 auch die Masse aus beiden Kanälen 19,20 zugeführt werden. Diese Maßnahme ist besonders vorteilhaft, da auf diese Weise der Druck beim Wechsel zwischen den Spritzaggregaten 5', 5" fortwährend konstant gehalten werden kann. Fig. 11 zeigt eine Ausführungsform, die von der Funktion her jener gemäß Fig. 8 entspricht, wobei hier die beiden Düsen 2', 2" im rechten Winkel zueinander angeordnet sind, die beiden Kanäle 19,20 in L-Form zueinander verlaufen und der Kanal 21 von einem dieser L-Abschnitte abzweigt. Beim Umschaltventil 22' ist daher wieder eine T-Kreuzung gebildet.

Bei den in den Figuren 8 bis 11 dargestellten Varianten ist der Kanalblock 18 vorzugsweise ein Bestandteil der Form und nicht ein Bestandteil der Spritzgussmaschine. Es ist jedoch auch möglich, den Kanalblock mit Umschalteinheit als eigenständige Baugruppe vorzusehen, die vor der Form auf einer festen Aufspannblatte der Spitzgussmaschine aufgebaut ist. Dies hat den Vorteil, dass dieselbe Umschalteinheit des Kanalblockes für mehrere Formen genutzt werden kann.

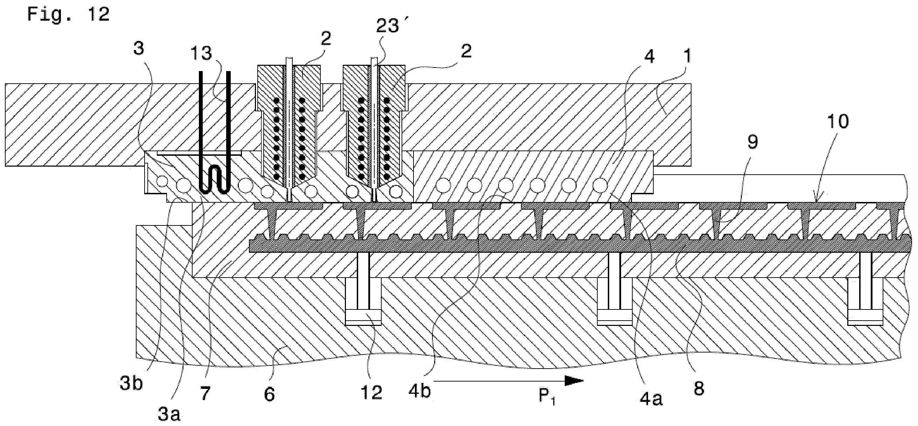

Fig. 12 zeigt in einer zu Fig. 1c analogen Ausführung und Darstellung eine Ausführungsvariante der Erfindung, bei welcher Bauteile aus zwei unterschiedlichen erstarrbaren plastischen Massen in einem Zwei-Komponenten-Verfahren herstellbar sind. Es sind zwei Düsen 2 vorgesehen, die beide im Vorlaufteil 3 positioniert sind. Ansonsten entspricht diese Ausführungsform der in Fig. 1c gezeigten. Durch die beiden Düsen 2 können somit zwei unterschiedlich zusammengesetzte plastische Massen über den Verteilerkanal 10 in die Kavität 8 eingebracht werden, wobei die Massen entweder gleichzeitig oder abwechselnd eingespritzt werden können. Werden die plastischen Massen gleichzeitig eingespritzt entsteht ein Bauteil mit einer Außen- und einer Innenschicht aus unterschiedlichen Materialen. Werden die Düsen nebeneinander angeordnet, was hier nicht dargestellt ist, kann ein Bauteil gebildet werden, welcher einen Längsabschnitt aus einem härteren und einen dazu parallelen Längsabschnitt aus einem weichen Material aufweisen soll. Werden die plastischen Massen nacheinander eingespritzt, entsteht beispielsweise ein Bauteil mit unterschiedlicher Farbe oder Steifigkeit des Materials in einzelnen Längsabschnitten. Beispielsweise wird zuerst eine härtere Komponente am Beginn eines Bauteils eingespritzt, im mittleren Teil eine weiche, nachgiebige Komponente, und danach wieder eine harte, steife Komponente. Das Ergebnis ist ein Bauteil mit einer hohen Flexibilität im mittleren Bereich. Mittels Nadelverschlussdüsen 23', die in Fig. 12 lediglich angedeutet sind, kann jeweils eine gezielte Unterbrechung des Massestromes erfolgen.

Bei einer Abwandlung der in Fig. 12 gezeigten Ausführung sind die zwei Düsen in einer separaten zur Spritzgussmaschine gehörenden Einheit untergebracht, in der Form befindet sich lediglich eine Düse, die entsprechend abwechselnd mit den beiden unterschiedlichen plastischen Massen versorgt wird.

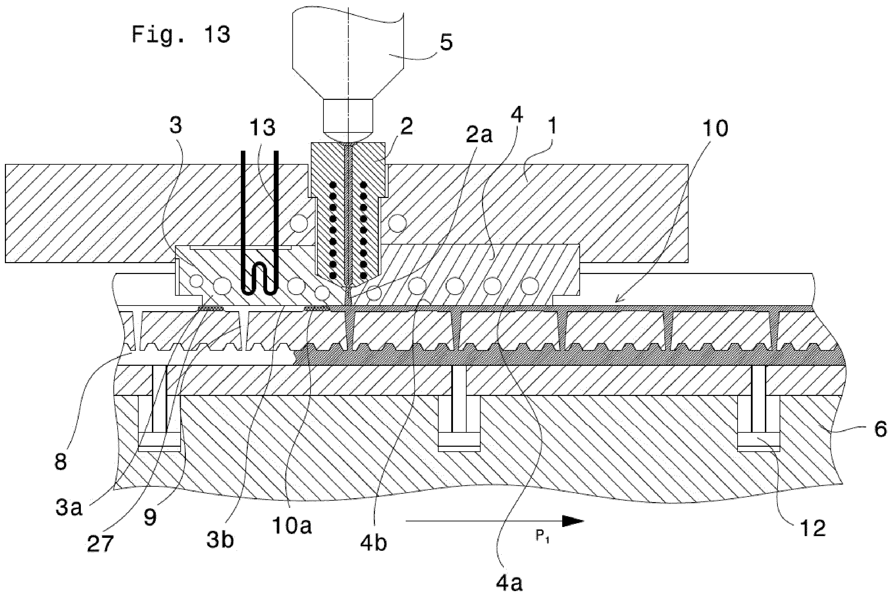

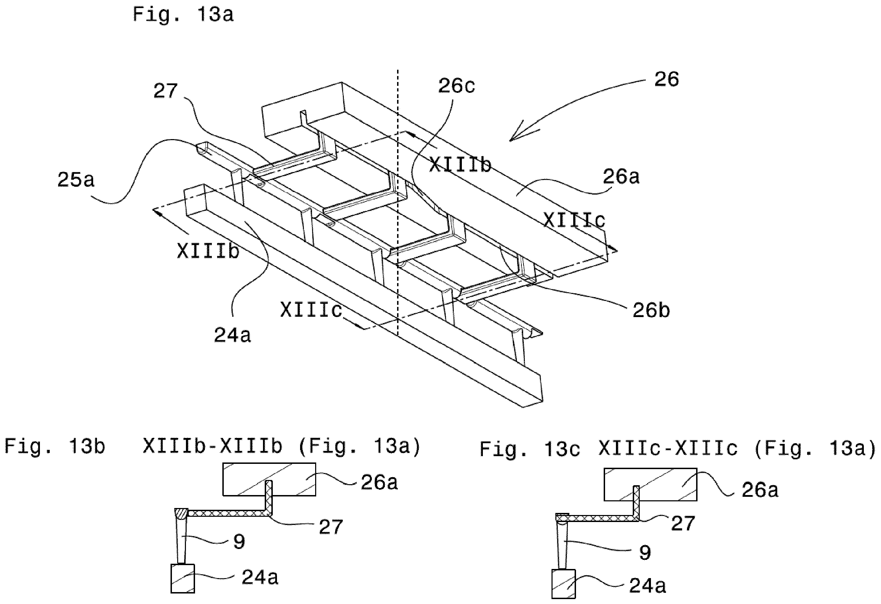

Fig. 13 zeigt gemeinsam mit Fig. 13a bis 13c eine Einrichtung 26 mit als Fließbremsen wirkenden Schiebern 27. Die Einrichtung 26 weist eine stationäre Betätigungsleiste 26a mit einer Betätigungs- bzw. Steuerkurve 26b auf, die seitlich neben dem Düsenloch 2a, ein wenig in Richtung der Nachlaufzone versetzt, eine Schräge 26c aufweist. Die Position des Düsenloches ist in Fig. 13a mit einer gestrichelten Linie angedeutet. Der Schlitten 6 ist im Bereich des Verteilerkanals 10 mit den Schiebern 27 ausgestattet. Mittels einer Steuervorrichtung werden dieser Schieber 27 betätigt, sobald der betreffende Abschnitt des Verteilerkanals 10 die Düse 2a in Richtung Nachlaufzone passiert hat. Dadurch vergrößert sich in der Nachlaufzone der Fließquerschnitt im Verteilerkanal 10 und ermöglicht eine bessere Druckübertragung in die bereits mit plastischer Masse gefüllten Abschnitte der Kavität 8. Die Schieber 27 wirken daher als Fließbremse im Verteilerkanal 10. In Fig. 13a sind sehr schematisch der Bauteil 24a und der Verteilerkanal-Massestrang 25a gezeigt. Fig. 13b zeigt einen Schieber 27 in seiner betätigten Position, Fig. 13c einen Schieber 27 in seiner unbetätigten Position.

Bei sämtlichen Ausführungsvarianten kann das Abtrennen der Verteilerkanal-Massestränge mitsamt den Anbindungs-Massesträngen sowie das Auswerfen des jeweiligen Bauteils bereits dann erfolgen, wenn der Erstarrungsprozess soweit fortgeschritten ist, dass diese Teile formstabil sind.

Als erstarrbare plastische Massen im Rahmen der erfindungsgemäßen Verfahren kommen sämtliche plastisch verarbeitbaren Massen, nämlich Thermoplaste, Duroplaste und Elastomere, in Frage. Je nach dem Typ der plastischen Masse sind die Düsen Heißkanal-oder Kaltkanaldüsen.

Grundsätzlich ist es möglich, das Verfahren derart durchzuführen und die Vorrichtung derart auszugestalten, dass die Formkavität(en) an stationären Formkomponenten vorgesehen sind und mit zumindest einem bewegten Spritzaggregat über bewegbare Formkomponenten eingespritzt wird.

### Bezugsziffernliste

- 1: Formeinsatz
- 2, 2', 2": Düse
- 2a: Düsenloch
- 3, 3': Vorlaufteil
- 4, 4': Nachlaufteil
- 3a, 4a, 3'a, 4'a .: Randabschnitt
- 3b, 4b, 3'b, 4'b: Randflächen
- 5, 5', 5": Spritzaggregat
- 6: Schlitten
- 7: Formeinsatz
- 7a: Backen
- 8, 8': Formkavität
- 9, 9': Anbindungen
- 10, 10': Verteilerkanal
- 10a, 10b: Abschnitt
- 12: Auswerfer
- 13: Heizelement
- 14, 14': Prägeeinrichtung
- 14a: Prägeleiste
- 15, 15': Prägestempel
- 16: Träger
- 17: Formeinsatz
- 17a: Backen
- 18: Kanalblock
- 19, 20, 21: Kanäle
- 22, 22': Umschaltventil
- 23, 23': Nadelverschlussdüse
- 24, 24', 24": Bauteil
- 24'a: klotzartiges Element
- 24": Bauteil
- 25a: Verteilerkanal-Massestrang
- 25b: Anbindung-Massestrang
- 26: Fließbremseinrichtung
- 26a: Betätigungsleiste
- 26b: Steuerkurve
- 26c: Schräge
- 27: Schieber

## Patentansprüche

1. Verfahren zur Herstellung von Bauteilen oder Profilen aus zumindest einer erstarrbaren plastischen Masse in einer Spritzgussanlage, welche stationäre Formkomponenten und gegenüber diesen bewegbare Formkomponenten aufweist, wobei die bewegbaren Formkomponenten zumindest eine Formkavität (8, 8') enthalten und die stationären Formkomponenten zumindest eine Angussstelle aufweisen, über welche die erstarrbare plastische Masse in den Bereich zwischen den stationären Formkomponenten und den Formkavität(en) (8, 8') in den bewegbaren Formkomponenten eingespritzt wird während die bewegbaren Formkomponenten mit den Formkavität(en) (8, 8') von der Angussstelle wegbewegt werden, **gekennzeichnet durch**
folgende Schritte:
a) Einspritzen von erstarrbarer plastischer Masse in einen in den bewegbaren Formkomponenten gebildeten Verteilerkanal (10, 10') und von diesem über Anbindungen (9, 9`)
b₁) entweder abschnittsweise in eine einzige Formkavität (8)
b₂) oder nacheinander in einzelne Formkavitäten (8'),
c) wobei der Verteilerkanal (10, 10') im Bereich der Angussstelle sowie in einer entgegen der Bewegungsrichtung der bewegten Formkomponenten an der einen Seite der Angussstelle befindlichen Vorlaufzone und in einer in der Bewegungsrichtung der bewegten Formkomponenten an der anderen Seite der Angussstelle befindlichen Nachlaufzone von zumindest einer stationären, temperierbaren Formkomponente mitumschlossen wird,
d) wobei im Verteilerkanal (10, 10') ein kontinuierlicher Verteilerkanal-Massestrang mit Anbindungs-Massesträngen gebildet wird, welcher unter zunehmender Abkühlung sowie Erstarrung und zunehmender Länge gemeinsam mit den befüllten Formkavitäten (8') bzw. Formkavitätsabschnitten (8) von der Angussstelle weg transportiert wird,
e) wobei der Verteilerkanal-Massestrang mitsamt den Anbindungs-Massesträngen nach seinem Erstarren und nach Öffnen der Formkavität (8) bzw. der Formkavitäten (8') von dem bzw. den Bauteil(en) abgetrennt wird und
f) der Bauteil bzw. die Bauteile ausgeworfen wird bzw. werden.

2. Verfahren nach Anspruch 1, **dadurch gekennzeichnet, dass** es ein diskontinuierliches Verfahren ist, bei welchem die bewegbaren Formkomponenten linear bewegt werden, oder dass es ein kontinuierliches Verfahren ist, bei welchem die bewegbaren Formkomponenten entlang eines geschlossenen Kreises bewegt werden.

3. Verfahren nach Anspruch 1, **dadurch gekennzeichnet, dass** es ein kontinuierliches Verfahren ist, bei welchem bewegbare Formkomponenten fortlaufend unmittelbar aneinandergefügt werden, befüllt werden, der/die Bauteile entformt wird bzw. werden und die Formkomponenten zum neuerlichen Befüllen zur Angussstelle rückgeführt werden.

4. Verfahren nach einem der Ansprüche 1 bis 3, **dadurch gekennzeichnet, dass** die den Verteilerkanal (10, 10') in der Vorlaufzone und/oder in der Nachlaufzone mitumschließende Formkomponente beheizt oder gekühlt wird.

5. Verfahren nach einem der Ansprüche 1, 2 oder 4, **dadurch gekennzeichnet, dass** die erstarrbare plastische Masse über die Anbindungen (9) abschnittsweise eine langgestreckte Formkavität (8) oder einzelne, in einer Reihe verlaufende Formkavitäten (8') befüllt, die in zumindest einem Formeinsatz (7) ausgebildet sind, welcher auf einem linear bewegbaren Schlitten (6) angeordnet ist.

6. Verfahren nach einem der Ansprüche 1, 2, 4 oder 5, **dadurch gekennzeichnet, dass** nach dem Befüllen der Formkavität (8) bzw. sämtlicher Formkavitäten (8') die bewegbaren Formkomponenten angehalten werden, die Zufuhr erstarrbarer plastischer Masse gestoppt wird und die Schritte e) und f) folgen.

7. Verfahren nach einem der Ansprüche 1 bis 4, **dadurch gekennzeichnet, dass** die erstarrbare plastische Masse über die Anbindungen (9') abschnittsweise eine kreisförmig umlaufende Formkavität (8) oder entlang eines Kreises aufeinanderfolgende einzelne Formkavitäten (8') befüllt, wobei die Formkavität (8) bzw. die einzelnen Formkavitäten (8') innerhalb von Formeinsätzen (17) vorgesehen ist bzw. sind, welche am kreisförmigen Außenumfang einer Dreheinheit der Kreisform folgend unmittelbar aneinander anschließen.

8. Verfahren nach einem der Ansprüche 1 bis 4, 6 oder 7, **dadurch gekennzeichnet, dass** in Schritt e) der erstarrte Verteilerkanal-Massestrang und die erstarrten Anbindungs-Massestränge nach dem Austreten der Formeinsätze (17) aus der Nachlaufzone durch sukzessives Öffnen der Formeinsätze (17) fortlaufend abgetrennt werden, wobei vorzugsweise auf Schritt e) folgend die Formeinsätze (17) nacheinander komplett geöffnet werden, entweder der in der jeweiligen Kavität (8') gebildete Bauteil ausgeworfen wird oder der in der kreisförmig umlaufenden Formkavität (8) kontinuierlich gebildete Bauteil abschnittsweise entformt wird, wobei anschließend die Formeinsätze (17) der Reihe nach geschlossen werden und während der kontinuierlichen Drehbewegung der Dreheinheit nacheinander wieder in die Vorlaufzone eintreten.

9. Vorrichtung zur Herstellung von Bauteilen oder Profilen aus zumindest einer erstarrbaren plastischen Masse in einer Spritzgussanlage, welche stationäre Formkomponenten und gegenüber diesen bewegbare Formkomponenten aufweist, welche zumindest eine Formkavität (8, 8') enthalten, wobei die stationären Formkomponenten einen beheizbaren Vorlaufteil (3, 3') und einen kühlbaren Nachlaufteil (4, 4') sowie zumindest eine Angussstelle im Bereich des Vorlaufteils (3, 3') und/oder des Nachlaufteils (4, 4') aufweisen,
**dadurch gekennzeichnet,dass**
die bewegbaren Formkomponenten entweder eine langestreckte Formkavität (8) oder in einer Reihe angeordnete einzelnen Kavitäten (8') enthalten und einen als Vertiefung ausgeführten Verteilerkanal (10, 10') aufweisen, welcher über Anbindungen (9, 9') entweder mit der langestreckten Formkavität (8) oder mit den einzelnen Kavitäten (8') verbunden ist,
wobei der Verteilerkanal (10, 10') bei geschlossener Form im Bereich des Vorlaufteils (3, 3') und des Nachlaufteils (4, 4') vom Vorlaufteil (3, 3') und vom Nachlaufteil (4, 4') mitumschlossen ist.

10. Vorrichtung nach Anspruch 9, **dadurch gekennzeichnet, dass** die bewegbaren Formkomponenten einen linear bewegbaren Schlitten (6) aufweisen, welcher mit zumindest einem Formeinsatz (7) versehen ist, welcher die langgestreckte Formkavität (8) oder die einzelnen Formkavitäten (8') enthält, über deren Erstreckung der Verteilerkanal (10) als im Formeinsatz (7) gerade verlaufende Vertiefung ausgebildet ist, wobei die langgestreckte Formkavität (8) vorzugsweise im Wesentlichen gerade oder insgesamt bogenförmig gekrümmt verläuft.

11. Vorrichtung nach Anspruch 9, **dadurch gekennzeichnet, dass** die bewegbaren Formkomponenten eine Dreheinheit mit einem kreisförmigen Außenumfang aufweisen, an welcher der Kreisform folgend unmittelbar aneinander anschließende Formeinsätze (17) angeordnet sind, die entweder jeweils zumindest eine Formkavität (8') oder gemeinsam eine einzige kreisförmig umlaufende Formkavität (8) enthalten, wobei der Verteilerkanal (10') als kreisförmig umlaufende Vertiefung über sämtliche Formeinsätze (17) verläuft.

12. Vorrichtung nach einem der Ansprüche 9 bis 11, **dadurch gekennzeichnet, dass** der Vorlaufteil (3, 3') und der Nachlaufteil (4, 4') dem Formeinsatz/den Formeinsätzen (7, 17) zugewandte freie Randabschnitte (3a, 4a, 3'a, 4'a) mit Randflächen (3b, 4b, 3'b, 4'b) aufweisen, welche bei geschlossener Form den Verteilerkanal (10, 10') dicht abdecken.

13. Vorrichtung nach einem der Ansprüche 9 bis 12, **dadurch gekennzeichnet, dass** der Vorlaufteil (3, 3') gegenüber dem Nachlaufteil (4, 4') abgesetzt bzw. tiefer gesetzt ist, sodass der Verteilerkanalspalt im Bereich unterhalb des Vorlaufteils (3, 3') dünnwandiger ist als im Bereich unterhalb des Nachlaufteiles (4, 4').

14. Vorrichtung nach einem der Ansprüche 9 bis 13, **dadurch gekennzeichnet, dass** sie eine Prägeeinrichtung (14, 14')) mit Prägestempeln (15, 15') aufweist, die lokal in den Verteilerkanal (10) im Bereich der Anbindungen (9) und/oder in die Kavität(en) einfahrbar sind, wobei vorzugsweise die Prägeeinrichtung (14, 14') eine Prägeleiste (14a) aufweist, die an einer stationären Formkomponente angeordnet ist, wobei die Prägestempel (15, 15') in einer bewegbaren Formkomponente derart positioniert sind, dass sie bei der Bewegung dieser Formkomponente nacheinander in ihre Prägeposition bringbar sind.

15. Vorrichtung nach einem der Ansprüche 9 bis 14, **dadurch gekennzeichnet, dass** sie eine Fließbremseinrichtung (26) mit einer an einer stationären Formkomponente angeordneten, stationären Betätigungsleiste (26a) und mit in einer bewegbaren Formkomponente gelagerten Schiebern (27) aufweist, welche nacheinander aus dem Verteilerkanal (10) im Bereich der des Vorlaufteils (3) gefahren werden, sobald ein Abschnitt des Verteilerkanals (10) die Düse (2a) in Richtung Nachlaufteil (4) passiert hat.

16. Vorrichtung nach einem der Ansprüche 9 bis 15, **dadurch gekennzeichnet, dass** sie zwei Spritzaggregate (5',5") und einen Kanalblock (18) mit zwei von den Spritzaggregaten (5',5") mit erstarrbarer plastischer Masse versorgbare Düsen (2', 2") aufweist, wobei von jeder Düse (2', 2") ein Kanal (19, 20) ins Zentrum des jeweiligen Kanalblockes (18) verläuft, wobei über ein Umschaltventil (22, 22') abwechselnd einer der beiden Kanäle (19, 20) mit einem weiteren Kanal (21), welcher zur Angussstelle im Bereich des Vorlauf- und Nachlaufteiles (3', 4') verläuft, verbindbar ist.

17. Vorrichtung nach einem der Ansprüche 9 bis 16, **dadurch gekennzeichnet, dass** sie zwei Spritzaggregate (5',5") und einen Kanalblock (18) mit zwei von den Spritzaggregaten (5',5") mit erstarrbarer plastischer Masse versorgbare Düsen (2', 2") aufweist, wobei von jeder Düse (2', 2") ein Kanal (19, 20) ins Zentrum des jeweiligen Kanalblockes (18) verläuft, wobei über Nadelverschlussdüsen (23) die beiden Kanäle (19, 20) gleichzeitig oder abwechselnd mit einem weiteren Kanal (21), welcher zur Angussstelle im Bereich des Vorlauf- und Nachlaufteiles (3', 4') verläuft, verbindbar sind.

18. Vorrichtung nach einem der Ansprüche 9 bis 17, **dadurch gekennzeichnet, dass** zwei Düsen (2) vorgesehen sind, die entweder beide im Vorlaufteil (3) positioniert sind oder Bestandteil einer Einheit der Spritzgussmaschine sind.

## Claims

1. Method of manufacturing components or profiles from at least one solidifiable plastic mass in an injection moulding facility which has stationary moulding components and, opposite them, movable moulding components, wherein the movable moulding components contain at least one moulding cavity (8, 8') and the stationary moulding components have at least one sprue through which the solidifiable plastic mass is injected into the area between the stationary moulding components and the moulding cavity(ies) (8, 8') in the movable moulding components while the movable moulding components with the moulding cavity(ies) (8, 8') are moved away from the sprue,
**characterised by**
the following steps:
a) injection moulding of a solidifiable plastic mass into a distribution channel (10, 10') formed in the movable moulding components and from this, via connections (9, 9')
b₁) either partly into a single moulding cavity (8)
b2) or, one after the other, into individual moulding cavities (8'),
c) wherein the distribution channel (10, 10') is surrounded by at least one stationary temperable moulding component in the area of the sprue as well as in a leading zone located on the one side of the sprue opposite the movement direction of the moved moulding components and in a trailing zone located on the other side of the sprue in the movement direction of the moved moulding components,
d) wherein, in the distribution channel (10, 10'), a continuous distribution channel strand of material is formed with connection strands of materials, which are transported away from the sprue while continuing to cool and setting as well as with increasing length together with the filled moulding cavities (8') or sections of moulding cavities (8),
e) wherein the distribution channel material strand together with the connection mass strands are separated from the component(s) after setting and after opening the moulding cavity (8) or cavities (8') and
f) the component or components is/are ejected.

2. Method according to claim 1, **characterised in that** it is a discontinuous method wherein the movable moulding components are moved linearly, or that it is a continuous method wherein the movable moulding components are moved along a closed circle.

3. Method according to claim 1, **characterised in that** it is a continuous method wherein movable moulding components moving forward are attached directly to one another, are filled, the component(s) is/are ejected, and the moulding components are returned to the sprue for refilling.

4. Method according to any one of claims 1 to 3, **characterised in that** the moulding components including the distribution channel (10, 10') in the leading zone and/or in the trailing zone are heated or cooled.

5. Method according to any one of claims 1, 2 or 4, **characterised in that**, via the connections (9), the solidifiable plastic mass partly fills a lengthwise extended moulding cavity (8) or individual moulding cavities (8') in a row of moving moulding cavities which are formed in at least one moulding insert (7) which is arranged on a movably linearly slide (6).

6. Method according to any one of claims 1, 2, 4 or 5, **characterised in that**, after filling the moulding cavity (8) or all moulding cavities (8'), the movable moulding components are halted, the supply of solidifiable plastic mass is stopped and steps e) and f) continue.

7. Method according to any one of claims 1 to 4, **characterised in that**, via the connections (9'), the solidifiable plastic mass partly fills a circumferential moulding cavity (8) or along individual moulding cavities (8'), provided consecutively along a circle, wherein the moulding cavity (8) or the individual moulding cavities (8') is or are provided inside moulding inserts (17) which are directly connected to each other on the circular perimeter of a rotary unit of the circular die.

8. Method according to any one of claims 1 to 4, 6 or 7, **characterised in that**, in step e), the solidified distribution channel mass strand and the solidified connection mass strands are separated successively after the withdrawal of the moulding inserts (17) from the trailing zone by the successive opening of the moulding inserts (17), wherein, preferably following after step e), the moulding inserts (17) are completely opened successively, either the component formed in the respective cavity (8') is ejected or the component, continuously formed partially in the circular-shaped moulding cavity (8), is ejected, wherein the moulding inserts (17) are then closed, one after the other and successively re-enter the trailing zone during the continued rotary movement of the rotary unit.

9. Device for manufacturing components or profiles from at least one solidifiable plastic mass in an injection moulding facility which has stationary moulding components and, opposite them, movable moulding components, said facility having at least one moulding cavity (8, 8') wherein the stationary moulding components have a heatable leading part (3, 3') and a coolable following part (4, 4') and at least one sprue in the region of the leading part (3, 3') and/or the following part (4, 4'),
**characterised in that**
the movable moulding components have either an elongated moulding cavity (8) or individual cavities (8') arranged in a row and a distribution channel (10, 10') formed as a depression which is connected via connections (9, 9') either to the extended moulding cavity (8) or with the individual cavities (8'),
wherein the distribution channel (10, 10') is surrounded by the leading part (3, 3') and by the trailing part (4, 4') in the region of the leading part (3, 3') and the trailing part (4, 4') when the mould is closed.

10. Device according to claim 9, **characterised in that** the movable moulding components have a linearly movable slide (6), which is provided with at least one mould insert (7) which contains the elongated moulding cavity (8) or the individual moulding cavities (8') by whose extension the distribution channel (10) is formed as a depression running straight in the moulding insert (7) wherein the extended moulding cavity (8) runs preferably essentially straight or is curved throughout in the shape of an arch.

11. Device according to claim 9, **characterised in that** the movable moulding components have a rotating unit with a circular outer perimeter on which, following the circular mould, moulding inserts (17) are arranged immediately adjacent to one another, each of which either has at least one moulding cavity (8') or, as a whole, has a moulding cavity (8) surrounding it in a circle, wherein the distribution channel (10') runs as a circularly surrounding depression over all of the moulding inserts (17).

12. Device according to any one of claims 9 to 11, **characterised in that** the leading part (3, 3') and the trailing part (4, 4') have free edge sections (3a, 4a, 3'a, 4'a) with edge faces (3b, 4b, 3'b, 4'b) facing the moulding insert/moulding inserts (7, 17) which cover and seal the distribution channel (10, 10') when the mould is closed.

13. Device according to any one of claims 9 to 12, **characterised in that** the leading part (3, 3') is thinner relative to the trailing part (4, 4') or is placed lower so that the distribution channel gap in the region underneath the leading part (3, 3') has a thinner wall than in the region under the trailing part (4, 4').

14. Device according to any one of claims 9 to 13, **characterised in that** it has an embossing device (14, 14')) with an embossing punch (15, 15') which can enter locally into the distribution channel (10) in the region of the connections (9) and/or in the cavity(cavities) wherein preferably the embossing device (14, 14') has an embossing strip (14a) which is arranged on a stationary moulding component, wherein the embossing punches (15, 15') are positioned in a movable moulding component such that they can be placed next to each other in their embossing position when their moulding components are moved.

15. Device according to any one of claims 9 to 14, **characterised in that** it has a flow braking device (26) with a stationary actuating strip (26a) arranged on a stationary moulding component and with slides (27) mounted in a movable moulding component, wherein said slides are moved, one after the other, out of the distribution channel (10) in the region of the leading part (3), as soon as a section of the distribution channel (10) has passed the nozzle (2a) towards the trailing part (4).

16. Device according to any one of claims 9 to 15, **characterised in that** it has two injection moulding systems (5', 5") and a channel block (18) with two nozzles (2', 2") which can be supplied by the injection moulding systems (5',5") with solidifiable plastic masses, wherein a channel (19, 20) runs from each nozzle (2', 2") to the centre of the respective channel block (18) which can be connected alternatively via a switch-over valve (22, 22') to one of the two channels (19, 20) to a further channel (21) which runs to the moulding sprue in the region of the leading and trailing parts (3', 4').

17. Device according to any one of claims 9 to 16, **characterised in that** it has two injection moulding systems (5',5") and a channel block (18) with two nozzles (2', 2") which can be supplied by the injection moulding systems (5',5") with solidifiable plastic mass, wherein a channel (19, 20) runs from each nozzle (2', 2") to the centre of the respective channel block (18) wherein both channels (19, 20) via needle valve nozzles (23) can be connected simultaneously or alternately to another channel (21), which runs to the moulding sprue in the region of the leading and trailing parts (3', 4').

18. Device according to any one of claims 9 to 17, **characterised in that** two nozzle (2) are provided which either are both positioned in the leading part (3) or are a component part of a unit of the injection moulding machine.

## Revendications

1. Procédé de fabrication d'éléments de construction ou de profilés à partir d'au moins une masse plastique solidifiable dans une installation de moulage par injection présentant des composants de moule immobiles et des composants de moule mobiles leur faisant face, les composants de moule mobiles contenant au moins une cavité de moule (8, 8') et les composants de moule immobiles présentant au moins un point de coulée, par lequel la masse plastique solidifiable est injectée dans la zone entre les composants de moule immobiles et la (les) cavité(s) de moule (8, 8') dans les composants de moule mobiles pendant que les composants de moule mobiles avec la (les) cavité(s) de moule (8, 8') sont éloignés du point de coulée,
**caractérisé par**
les étapes suivantes :
a) injection de la masse plastique solidifiable dans un canal de distribution (10, 10') formé dans les composants de moule mobiles et à partir de celui-ci par des liaisons (9, 9')
b₁) soit par sections dans une seule cavité de moule (8),
b₂) soit successivement dans des cavités de moule (8') individuelles,
c) le canal de distribution (10, 10') étant entouré d'au moins un composant de moule immobile dans la zone du point de coulée ainsi que dans une zone avant se trouvant de l'un côté du point de coulée dans le sens contraire du mouvement des composants de moule mobiles et dans une zone arrière se trouvant de l'autre côté du point de coulée dans le sens du mouvement des composants de moule mobiles, composant de moule immobile pouvant être tempéré mobile,
d) un boudin de masse étant formé dans le canal de distribution (10, 10') avec des boudins de masse de liaison, qui est éloigné du point de coulée en même temps que les cavités de moule (8') ou des sections de cavité de moule (8) remplies à force de refroidissement, de solidification et de longueur croissants,
e) le boudin de masse du canal de distribution avec les boudins de masse de liaison étant coupé du ou des élément(s) de construction après sa solidification et l'ouverture de la cavité de moule (8) ou des cavités de moule (8') et
f) l'élément ou les éléments de construction étant rejeté ou rejetés.

2. Procédé selon la revendication 1, **caractérisé en ce que** c'est un procédé discontinu, dans lequel les composants de moule mobiles sont déplacés linéairement, ou que c'est un procédé continu, dans lequel les composants de moule mobiles sont déplacés le long d'un cercle fermé.

3. Procédé selon la revendication 1, **caractérisé en ce que** c'est un procédé continu, dans lequel des composants de moule mobiles sont accolés immédiatement et continuellement, sont remplis, l'élément/les éléments de construction est ou sont démoulé(s) et les composants de moule sont renvoyés au point de coulée pour un nouveau remplissage.

4. Procédé selon l'une des revendications de 1 à 3, **caractérisé en ce que** le composant de moule entourant le canal de distribution (10, 10') dans la zone avant et/ou dans la zone arrière est chauffé ou refroidi.

5. Procédé selon l'une des revendications 1, 2 ou 4, **caractérisé en ce que** la masse plastique solidifiable remplit par sections via les liaisons (9) une cavité de moule allongée (8) ou des cavités de moule individuelles (8') s'étendant en une rangée et étant formées dans au moins un moule rapporté (7) disposé sur un chariot à déplacement linéaire (6).

6. Procédé selon l'une des revendications 1, 2, 4 ou 5, **caractérisé en ce qu'**après le remplissage de la cavité de moule (8) ou de toutes les cavités de moule (8'), les composants de moule mobiles sont immobilisés, l'alimentation en masse plastique solidifiable est arrêtée et les étapes e) et f) suivent.

7. Procédé selon l'une des revendications de 1 à 4, **caractérisé en ce que** la masse plastique solidifiable remplit par sections via les liaisons (9') une cavité de moule (8) entourant circulairement ou des cavités de moule individuelles (8') consécutives le long d'un cercle, la cavité de moule (8) ou les cavités de moule individuelles (8') étant prévue(s) au sein des moules rapportés (17), qui se suivent immédiatement sur la périphérie circulaire d'une unité de rotation de la forme circulaire.

8. Procédé selon l'une des revendications de 1 à 4, 6 ou 7, **caractérisé en ce que** le boudin de masse du canal de distribution solidifié et les boudins de masse de liaison solidifiés pendant l'étape e) sont coupés en continu par l'ouverture successive des moules rapportés (17) après la sortie de ces moules (17) de la zone arrière, de préférence après l'étape e), les moules rapportés (17) étant ouverts complètement et successivement, soit l'élément de construction formé dans la cavité (8') respective est éjecté, soit l'élément de construction formé en continu dans la cavité de moule entourant circulairement (8) est démoulé par sections, les moules rapportés (17) étant ensuite fermés au tour de rôle et revenant dans la zone avant les uns après les autres pendant la rotation continue de l'unité de rotation.

9. Dispositif de fabrication d'éléments de construction ou de profilés à partir d'au moins une masse plastique solidifiable dans une installation de moulage par injection présentant des composants de moule immobiles et des composants de moule mobiles leur faisant face contenant au moins une cavité de moule (8, 8'), les composants de moule immobiles présentant une partie avant pouvant être chauffée (3, 3') et une partie arrière pouvant être refroidie (4, 4') ainsi qu'au moins un point de coulée dans la zone de la partie avant (3, 3') et/ou de la partie arrière (4, 4'),
**caractérisé en ce que**
les composants de moule mobiles contiennent soit une cavité de moule allongée (8), soit des cavités individuelles (8') disposées en une rangée et présentent un canal de distribution (10, 10') réalisé en forme d'évidement et relié par des liaisons (9, 9') soit avec la cavité de moule allongée (8), soit avec les cavités individuelles (8'),
le canal de distribution (10, 10'), lorsque le moule est fermé, est entouré de la partie avant (3, 3') et de la partie arrière (4, 4') dans la zone de la partie avant (3, 3') et de la partie arrière (4, 4').

10. Dispositif selon la revendication 9, **caractérisé en ce que** les composants de moule mobiles présentent un chariot se déplaçant linéairement (6) et équipé d'au moins un moule rapporté (7) contenant la cavité de moule allongée (8) ou les cavités de moule individuelles (8'), sur l'étendue desquelles le canal de distribution (10) est réalisé en forme d'évidement s'étendant en ligne droite dans le moule de rapport (7), la cavité de moule allongée (8) s'étendant pour l'essentiel en ligne droite ou recourbée en forme d'arc dans sa totalité.

11. Dispositif selon la revendication 9, **caractérisé en ce que** les composants de moule mobiles présentent une unité de rotation avec une périphérie extérieure circulaire sur laquelle sont disposés des moules rapportés (17) immédiatement adjacents suivant la forme circulaire et contenant soit au moins une cavité de moule (8') chacun, soit une unique cavité de moule entourant circulairement (8) ensemble, le canal de distribution (10') s'étendant sur tous les moules rapportés (17) sous forme d'évidement entourant circulairement.

12. Dispositif selon l'une des revendications de 9 à 11, **caractérisé en ce que** la partie avant (3, 3') et la partie arrière (4, 4') présentent des parties de bord libres (3a, 4a, 3'a, 4'a) orientées vers le(s) moule(s) rapporté(s) (7, 17) avec des surfaces de bord (3b, 4b, 3'b, 4'b) recouvrant hermétiquement le canal de distribution (10, 10') lorsque le moule est fermé.

13. Dispositif selon l'une des revendications de 9 à 12, **caractérisé en ce que** la partie avant (3, 3') est décalée par rapport à la partie arrière (4, 4') ou est mise plus bas que cette dernière, de telle sorte que la fente du canal de distribution au-dessous de la partie avant (3, 3') a des parois plus minces qu'au-dessous de la partie arrière (4, 4').

14. Dispositif selon l'une des revendications de 9 à 13, **caractérisé en ce qu'**il présent un dispositif d'estampage (14, 14')) avec des poinçons (15, 15') qui peuvent être introduits localement dans le canal de distribution (10) dans la zone des liaisons (9) et/ou dans la/les cavité(s), le dispositif d'estampage (14, 14') présentant de préférence une baguette d'estampage (14a) disposée sur un composant de moule immobile, les poinçons (15, 15') étant positionnés dans un composant de moule mobile de manière à pouvoir être amenés dans leur position d'estampage les uns après les autres lors du mouvement de ce composant de moule.

15. Dispositif selon l'une des revendications de 9 à 14, **caractérisé en ce qu'**il présente un dispositif de frein d'écoulement (26) avec une barre d'actionnement immobile (26a) disposée sur un composant de moule immobile et avec des coulisseaux (27) placés dans un composant de moule mobile et déplacés successivement du canal de distribution (10) dans la zone de la partie avant (3) dès qu'une section du canal de distribution (10) a franchi la buse (2a) dans le direction de la partie arrière (4).

16. Dispositif selon l'une des revendications de 9 à 15, **caractérisé en ce qu'**il présente deux unités d'injection (5',5") et un bloc de canal (18) avec deux buses (2', 2") alimentées en masse plastique solidifiable par les unités d'injection (5',5"), un canal (19, 20) s'étendant de chaque buse (2', 2") vers le centre du bloc de canal (18) respectif, l'un des deux canaux (19, 20) pouvant être relié tour à tour au moyen d'une vanne de commutation (22, 22') avec un autre canal (21) s'étendant vers le point de coulée dans la zone de la partie avant et de la partie arrière (3', 4').

17. Dispositif selon l'une des revendications de 9 à 16, **caractérisé en ce qu'**il présente deux unités d'injection (5', 5") et un bloc de canal (18) avec deux buses (2', 2") alimentées en masse plastique solidifiable par les unités d'injection (5', 5"), un canal (19, 20) s'étendant de chaque buse (2', 2") vers le centre du bloc de canal (18) respectif, les deux canaux (19, 20) pouvant être reliés simultanément ou tour à tour au moyen de buses à obturateur à aiguille (23) avec un autre canal (21) s'étendant vers le point de coulée dans la zone de la partie avant et de la partie arrière (3', 4').

18. Dispositif selon l'une des revendications de 9 à 17, **caractérisé en ce que** deux buses (2) sont prévues, qui sont soit positionnées toutes les deux dans la partie avant (3), soit font partie d'une unité de la machine de moulage par injection.
